# EUROPÄISCHE PATENTSCHRIFT

(11) **EP 3 854 028 B1**
(45) Veröffentlichungstag und Bekanntmachung des Hinweises auf die Patenterteilung: **09.02.2022**
(21) Anmeldenummer: 20726047.2
(22) Anmeldetag: 12.05.2020
(51) Int. Cl.: H04L 12/12

(54) **VERFAHREN ZUM ERFASSEN VON NETZWERKTEILNEHMERN IN EINEM AUTOMATISIERUNGSNETZWERK UND AUTOMATISIERUNGSNETZWERK**
METHOD FOR DETECTING NETWORK SUBSCRIBERS IN AN AUTOMATION NETWORK AND AUTOMATION NETWORK
PROCÉDÉ DE DÉTECTION D'ABONNÉS DU RÉSEAU DANS UN RÉSEAU D'AUTOMATISATION ET RÉSEAU D'AUTOMATISATION

(30) Priorität: 28.05.2019 DE 102019114303
(43) Veröffentlichungstag der Anmeldung: 28.07.2021
(73) Patentinhaber: Beckhoff Automation GmbH, 33415 Verl (DE)
(72) Erfinder: JANSSEN, Dirk, 33415 Verl (DE); ESSLER, Florian, 90427 Nürnberg (DE); BECKMANN, Guido, 33415 Verl (DE); BECKHOFF, Hans, 33415 Verl (DE); BÜTTNER, Holger, 12205 Berlin (DE); ROSTAN, Martin, 90482 Nürnberg (DE); RETTIG, Thomas, 33378 Rheda-Wiedenbrück (DE)
(74) Vertreter: Patentanwaltskanzlei WILHELM & BECK
(86) Internationale Anmeldenummer: PCT/EP2020/063186
(87) Internationale Veröffentlichungsnummer: WO 2020/239434

(56) Entgegenhaltungen:
- EP-A1- 3 179 672
- DE-A1-102007 058 267
- DE-A1-102014 106 019
- DE-A1-102014 112 082

## Beschreibung

Die vorliegende Erfindung betrifft ein Verfahren zum Erfassen von Netzwerkteilnehmern in einem Automatisierungsnetzwerk mittels Abfragetelegrammen. Die Erfindung betrifft des Weiteren ein Automatisierungsnetzwerk, das zu einer Übertragung der Abfragetelegramme ausgelegt ist. Ferner betrifft die Erfindung einen Konfigurationsteilnehmer und einen Netzwerkverteiler, die ausgebildet sind, das Verfahren zum Erfassen von Netzwerkteilnehmern auszuführen.

Diese Patentanmeldung beansprucht die Priorität der deutschen Patentanmeldung DE 10 2019 114 303.9, deren Offenbarungsgehalt hiermit durch Rückbezug aufgenommen wird.

Maschinen oder Anlagen eines Automatisierungssystems werden häufig mithilfe speicherprogrammierbarer Steuerungen (SPS) gesteuert. Zur Steuerung oder Regelung der Aktoren und Sensoren der Maschine oder der Anlage nutzt die SPS meist eine Kommunikationsschnittstelle, die in Form eines Feldbussystems verwirklicht sein kann. Mit Feldbussystemen sind Bussysteme gemeint, bei denen dezentral angeordnete Geräte einer Maschinenperipherie wie Eingangs- und/oder Ausgangs-Module, Aktoren und Sensoren einer Maschine oder Anlage, Antriebe und Bedienterminals über das Feldbussystem mit Steuereinheiten verbunden sind. Für die Datenübertragung steht eine gemeinsame Datenleitung, in Form des Feldbusses oder beispielsweise als Funkstrecke, zur Verfügung. Insbesondere für den Fall, dass mehrere Netzwerkteilnehmer gleichzeitig Telegramme versenden, muss für das Feldbussystem eine Möglichkeit geschaffen werden, damit sich die Netzwerkteilnehmer die Datenleitung teilen können. Dies kann beispielsweise mithilfe des sogenannten "Master-Slave-Prinzips" erfolgen.

In der Regel bilden die Steuereinheiten am Feldbus die aktiven Busteilnehmer, die sogenannten "Master-Netzwerkteilnehmer". Die Master-Netzwerkteilnehmer verfügen über die Zugriffsberechtigung des Feldbussystems und legen den Datenverkehr in Form von Telegrammen auf dem Feldbus fest. Die passiven Feldbusteilnehmer, die sogenannten "Slave-Netzwerkteilnehmer", entsprechen meist den Maschinenperipheriegeräten. Die Slave-Netzwerkteilnehmer verfügen über keine Zugriffsberechtigung und können empfangene Daten bzw. Telegramme nur quittieren oder auf Anfrage eines Master-Netzwerkteilnehmers Daten bzw. Telegramme übertragen.

Die Netzwerkteilnehmer in dem Automatisierungsnetzwerk können Protokoll-Netzwerkteilnehmer umfassen, die ausgelegt sind ein bestimmtes Datenübertragungsprotokoll zu verarbeiten. Diese können beispielsweise als Slave-Netzwerkteilnehmer ausgebildet sein. Weiterhin kann das Automatisierungsnetzwerk einen Konfigurationsteilnehmer umfassen, der als Master-Netzwerkteilnehmer ausgebildet ist und eine Konfiguration der Netzwerkteilnehmer des Automatisierungsnetzwerks vornehmen kann. Nachfolgend werden die Slave-Netzwerkteilnehmer als Protokoll-Netzwerkteilnehmer und der Master-Netzwerkteilnehmer als Konfigurationsteilnehmer bezeichnet. Darüber hinaus können im Automatisierungsnetzwerk auch Netzwerkteilnehmer angeordnet sein, die ein von dem bestimmten Datenübertragungsprotokoll abweichendes Datenübertragungsprotokoll verarbeiten. Zum Beispiel kann das bestimmte Datenübertragungsprotokoll in Form des EtherCAT Datenübertragungsprotokolls verwirklicht sein, mit dem der Steuerungsbetrieb erfolgt.

In Automatisierungsnetzwerken, in denen der Datenverkehr mittels Telegrammen mit zugrundeliegendem EtherCAT Datenübertragungsprotokoll erfolgt, nachfolgend als EtherCAT Netzwerke bezeichnet, werden die Telegramme durch alle Protokoll-Netzwerkteilnehmer geroutet und im Falle einer an einer Datenleitung angeschlossenen Kette an Protokoll-Netzwerkteilnehmern von dem letzten Protokoll-Netzwerkteilnehmer an den Konfigurationsteilnehmer zurückgesendet. Dabei bezeichnet Routing das Festlegen von Übertragungswegen für die Übermittlung von Telegrammen im Automatisierungsnetzwerk. Nachteilig an einem solchen EtherCAT Netzwerk ist der Umstand, dass das EtherCAT Netzwerk meist nur mit einer Datenübertragungsrate betrieben wird (in der Regel 100 Mbit/s), und insbesondere in immer größer und komplexer werdenden EtherCAT Netzwerken oder in solchen in denen eine hohe Datenmenge produziert wird, beispielsweise aufgrund genutzter Vision-Kameras oder Messtechnikgeräten mit hohen Abtastraten, an die Kapazitätsgrenzen gestoßen wird. Zudem kann mit zunehmender Größe des Automatisierungsnetzwerks, mit einer Vielzahl an Protokoll-Netzwerkteilnehmern, auch die Laufzeit des Telegramms durch das Automatisierungsnetzwerk steigen, da jeder Protokoll-Netzwerteilnehmer die an ihn adressierten Ausgangsdaten des Telegramms im Durchlauf ("on the fly") liest und seine Eingangsdaten in das weitergeleitete Telegramm legt, und dabei alle Protokoll-Netzwerkteilnehmer durchlaufen werden. Das Senden eines Telegramms von einem Protokoll-Netzwerkteilnehmer in einem EtherCAT Netzwerk entspricht dem Eintragen von Informationen in das vom Konfigurationsteilnehmer gesendete Telegramm und das Weiterleiten des Telegramms an einen in Telegrammlaufrichtung nachfolgenden Netzwerkteilnehmer, da ein Protokoll-Netzwerkteilnehmer in einem EtherCAT Netzwerk selbst keine Quittierungs- oder Antworttelegramme auf Anfrage des Konfigurationsteilnehmers sendet. Sofern im Folgenden allgemein von einem Senden eines Protokoll-Netzwerkteilnehmers oder eines Netzwerkverteilers gesprochen wird, ist die zuvor beschriebene Funktionalität vollumfänglich mit umfasst.

Telegrammlaufzeiten durch das EtherCAT Netzwerk werden vor allem bei sehr kurzen Zykluszeiten relevant. Die Zykluszeit bezeichnet den Abstand von zwei Programmzyklen der SPS. Die Zykluszeit sollte dabei mindestens so groß sein wie die Zeit, die der Programmzyklus der SPS selbst in Anspruch nimmt. Erfolgt die Übertragung der Telegramme synchron zum Programmzyklus, so werden die Telegramme mit der Zykluszeit des SPS-Programms gesendet. Hierbei sollte die Durchlaufzeit eines Telegramms durch das EtherCAT Netzwerk kleiner als die Zykluszeit selbst ausgebildet sein. Als eine weitergehende Optimierung können die Telegramme nach dem Bereitstellen der Ausgangsdaten durch die SPS gesendet werden, und sollten vor dem Einlesen der Eingangsdaten durch die SPS wieder zurück empfangen sein. In diesem Fall sollte die Zykluszeit größer ausgebildet sein als die Zeit, die der Programmzyklus der SPS und die Durchlaufzeit der Telegramme durch das EtherCAT Netzwerk in Anspruch nimmt.

Meist werden Netzwerkverteiler, sogenannte "Switche" in Automatisierungsnetzwerken eingesetzt, um die einzelnen Datenleitungen mit den angeschlossenen Netzwerkteilnehmern miteinander zu verbinden und dafür Sorge zu tragen, dass die Daten bzw. Telegramme über die an den einzelnen Ein-/Ausgangs-Ports der Netzwerkverteiler über weitere Datenleitungen angeschlossenen Netzwerkteilnehmer an ihr Ziel gelangen. Dies setzt jedoch voraus, dass die Struktur des Automatisierungsnetzwerks und die an den einzelnen Ein-/Ausgangs-Ports des jeweiligen Netzwerkverteilers angeschlossenen Netzwerkteilnehmer bekannt sind, um die Telegramme, die für Steuerungsaufgaben im EtherCAT Netzwerk versendet werden, auch gezielt an Protokoll-Netzwerkteilnehmer ausgeben zu können, die im Rahmen der Steuerungsaufgabe einen Beitrag leisten sollen.

Dokument EP 3 179 672 A1 offenbart ein Netzwerk mit einem Konfigurationsteilnehmer und mehreren Protokoll-Netzwerkteilnehmern. Das Dokument adressiert das Problem, mittels Abfragetelegrammen eine automatische Erkennung von Teilnehmern zu erzielen. Dazu versendet der Konfigurationsteilnehmer Abfragetelegramme über das Netzwerk. Empfängt ein Protokoll-Netzwerkteilnehmer ein Abfragetelegramm, so trägt er eine Netzwerkteilnehmer-Information ein und sendet das Telegramm an den nächsten Teilnehmer weiter. Gibt es keinen nächsten Teilnehmer, so wird das Telegramm an den Konfigurationsteilnehmer zurückgesendet. So kann der Konfigurationsteilnehmer alle Teilnehmer des Netzwerks automatisch erkennen.

Es ist daher Aufgabe der vorliegenden Erfindung, ein Verfahren zum Erfassen von Netzwerkteilnehmern in einem Automatisierungsnetzwerk anzugeben, das eine vereinfachte Bestimmung einer Netzwerkstruktur und optimierte Konfiguration ermöglicht. Es ist weiterhin Aufgabe der Erfindung, ein verbessertes Automatisierungsnetzwerk, einen verbesserten Konfigurationsteilnehmer und einen verbesserten Netzwerkverteiler in dem Automatisierungsnetzwerk anzugeben, die den Datendurchsatz in dem Automatisierungsnetzwerk erhöhen.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Verfahren zum Erfassen von Netzwerkteilnehmern in einem Automatisierungsnetzwerk mittels von einem Konfigurationsteilnehmer versendeter Abfragetelegramme und ein zugehöriges Automatisierungsnetzwerk vorgeschlagen. Die Netzwerkteilnehmer im Automatisierungsnetzwerk sind über Datenleitungen verbunden, wobei die Netzwerkteilnehmer zumindest einen Protokoll-Netzwerkteilnehmer umfassen, der ausgelegt ist, ein bestimmtes Datenübertragungsprotokoll zu verarbeiten, und die Netzwerkteilnehmer zumindest einen Netzwerkverteiler umfassen, der Ein-/Ausgangs-Ports aufweist. Empfängt ein Protokoll-Netzwerkteilnehmer ein Abfragetelegramm über eine Datenleitung, so trägt der Protokoll-Netzwerkteilnehmer eine Netzwerkteilnehmer-Information in das Abfragetelegramm ein und versendet das Abfragetelegramm an einen nachfolgenden Netzwerkteilnehmer über eine weitere als die empfangende Datenleitung. Ist kein nachfolgender Netzwerkteilnehmer an einer weiteren Datenleitung angeschlossen, so sendet der Protokoll-Netzwerkteilnehmer das Abfragetelegramm über die empfangende Datenleitung an den Konfigurationsteilnehmer zurück. Empfängt ein Netzwerkverteiler das Abfragetelegramm über die Datenleitung auf einem ersten Ein-/Ausgangs-Port, so trägt der Netzwerkverteiler eine Port-Information über die weiteren Ein-/Ausgangs-Ports des Netzwerkverteilers, an die weitere Datenleitungen angeschlossen sind, in das Abfragetelegramm ein und sendet das Abfragetelegramm über die empfangende Datenleitung an den Konfigurationsteilnehmer zurück. Empfängt der Konfigurationsteilnehmer das Abfragetelegramm von dem Netzwerkverteiler über die Datenleitung, so erzeugt der Konfigurationsteilnehmer im Anschluss auf der Grundlage der Port-Information weitere Abfragetelegramme mit jeweils einer Routing-Information und versendet diese über die Datenleitung an den Netzwerkverteiler. Der Netzwerkverteiler gibt die weiteren Abfragetelegramme auf dem der jeweiligen Routing-Information zugeordneten weiteren Ein-/Ausgangs-Port aus, um Netzwerkteilnehmer zu erfassen, die an den jeweiligen weiteren Ein-/Ausgangs-Ports des Netzwerkverteilers über die weiteren Datenleitungen angeschlossen sind.

Mithilfe des vorgeschlagenen Verfahrens kann der Aufbau des Automatisierungsnetzwerks, das heißt die Netzwerkstruktur und die darin angeordneten Netzwerkteilnehmer schrittweise und flexibel erfasst werden. Die Netzwerkstruktur kann hierbei beliebig gewählt worden und an die jeweiligen industriellen Bedürfnisse angepasst sein. Insbesondere kann durch das schrittweise Erfassen der Netzwerkteilnehmer des Automatisierungsnetzwerks eine schnellere Verarbeitung der erhaltenen Informationen ermöglicht, und daraus eine Netzwerkstruktur erstellt bzw. dynamisch angepasst werden.

Das Verfahren kann vorteilhaft dazu eingesetzt werden, Protokoll-Netzwerkteilnehmer zu ermitteln, die beispielsweise das EtherCAT Datenübertragungsprotokoll verarbeiten, wenn der Konfigurationsteilnehmer als EtherCAT Master-Netzwerkteilnehmer in einer zugrundeliegenden Master-Slave-Hierarchie ausgebildet ist. Hierbei entspricht das Senden eines Telegramms von einem Protokoll-Netzwerkteilnehmer in einem EtherCAT Netzwerk dem Eintragen von Informationen in das vom Masternetzwerkteilnehmer bzw. Konfigurationsteilnehmer gesendete Telegramm und das Weiterleiten des Telegramms an einen in Telegrammlaufrichtung nachfolgenden Netzwerkteilnehmer, da ein Protokoll-Netzwerkteilnehmer in einem EtherCAT Netzwerk selbst keine Quittierungs- oder Antworttelegramme auf Anfrage des Master-Netzwerkteilnehmers bzw. Konfigurationsteilnehmers sendet. Ist der Konfigurationsteilnehmer beispielsweise als Standard Ethernet Master-Netzwerkteilnehmer ausgebildet, das heißt er erstellt und verarbeitet Abfrage- und/oder Konfigurationstelegramme mit zugrundeliegendem Ethernet Datenübertragungsprotokoll, so können mithilfe des Verfahrens Protokoll-Netzwerkteilnehmer ermittelt werden, die das Ethernet Datenübertragungsprotokoll verarbeiten. Vorteilhaft dabei ist, dass das vorgeschlagene Verfahren nicht auf ein bestimmtes vorgegebenes Datenübertragungsprotokoll beschränkt ist, sondern variabel einsetzbar ist.

Unter einer empfangenden Datenleitung im Sinne der vorliegenden Erfindung ist eine Datenleitung zu verstehen, über die ein Netzwerkteilnehmer ein Telegramm empfangen hat und das Telegramm nach der Verarbeitung dann auch wieder über die gleiche Datenleitung sendet, über die der Netzwerkteilnehmer das Telegramm zuvor empfangen hat. Sofern der Netzwerkteilnehmer das Telegramm über eine Datenleitung sendet, über die der Netzwerkteilnehmer das Telegramm zuvor nicht empfangen hat, so wird im Allgemeinen von einer Datenleitung oder einer weiteren Datenleitung gesprochen.

Um die an den einzelnen weiteren Ein-/Ausgangs-Ports des Netzwerkverteilers über die weiteren Datenleitungen angeschlossenen Netzwerkteilnehmer zu ermitteln, sendet der Konfigurationsteilnehmer weitere Abfragetelegramme. Die weiteren Abfragetelegramme werden einzeln über die an den weiteren Ein-/Ausgangs-Ports angeschlossenen weiteren Datenleitungen ausgegeben, um die daran angeschlossenen Netzwerkteilnehmer bestmöglich erfassen zu können. Das heißt ein weiteres Abfragetelegramm durchläuft nicht die einzelnen weiteren Ein-/Ausgangs-Ports mit den weiteren Datenleitungen nacheinander, sondern die einzelnen weiteren Ein-/Ausgangs-Ports des Netzwerkverteilers mit den über den weiteren Datenleitungen angeschlossenen Netzwerkteilnehmern, werden mittels den weiteren Abfragetelegrammen parallel oder zumindest teilweise parallel bearbeitet. Beispielsweise kann die Ausgabe der weiteren Telegramme über die einzelnen weiteren Ein-/Ausgangs-Ports des Netzwerkverteilers prioritäts- und/oder zeitgesteuert erfolgen. Die parallele Bearbeitung kann insbesondere in großen Automatisierungsnetzwerken mit vielen Netzwerkteilnehmern die Durchlaufzeiten der Abfragetelegramme signifikant verringern und sich vorteilhaft auf eine kurze Zykluszeit (beispielsweise ≤ 1 ms) auswirken. Auch sind in diesem Zusammenhang für die parallele Ausgabe der weiteren Abfragetelegramme für die Datenkommunikation unterschiedliche Datenübertragungsraten über die einzelnen Ein-/Ausgangs-Ports des Netzwerkverteilers denkbar.

Durch das Versenden von mehreren Abfragetelegrammen über die einzelnen weiteren Ein-/Ausgangs-Ports des Netzwerkverteilers besteht für den Konfigurationsteilnehmer, im Vergleich zu einem einzigen Abfragetelegramm, zudem eine größere Wahrscheinlichkeit, dass die mehreren Abfragetelegramme von den an den jeweiligen Ein-/Ausgangs-Ports über die entsprechende weitere Datenleitung angeschlossenen Netzwerkteilnehmern wieder an den Konfigurationsteilnehmer zurückgesendet werden. Der Konfigurationsteilnehmer kann aus einem unbeantworteten Abfragetelegramm beispielsweise darauf schließen, dass der entsprechende Netzwerkteilnehmer bzw. über den jeweiligen weiteren Ein-/Ausgangs-Port des Netzwerkverteilers angeschlossene wenigstens eine Netzwerkteilnehmer das dem Abfragetelegramm und dem weiteren Abfragetelegramm zugrundeliegende Datenübertragungsprotokoll nicht verarbeitet. Grundsätzlich kann ein Netzwerkteilnehmer, der das dem Abfragetelegramm zugrundeliegende Datenübertragungsprotokoll nicht verarbeitet, das Abfragetelegramm zwar an den nachfolgend an der Datenleitung angeschlossenen Netzwerkteilnehmer senden, jedoch sendet der Netzwerkteilnehmer das Abfragetelegramm nicht an den Konfigurationsteilnehmer zurück für den Fall, dass kein nachfolgender Netzwerkteilnehmer an der Datenleitung angeschlossen ist.

Die an den einzelnen weiteren Ein-/Ausgangs-Ports des Netzwerkverteilers über die weiteren Datenleitungen angeschlossenen Netzwerkteilnehmer tragen als Protokoll-Netzwerkteilnehmer und als Netzwerkverteiler die Netzwerkteilnehmer-Information sowie die Port-Information wie oben beschrieben in das jeweilige weitere Abfragetelegramm ein. Im Falle eines weiteren Netzwerkverteilers, der als solcher von dem Konfigurationsteilnehmer im Automatisierungsnetzwerk ermittelt worden ist, verfährt der Konfigurationsteilnehmer nach dem obigen Verfahren und sendet erneut weitere Abfragetelegramme an den weiteren Netzwerkverteiler, die der weitere Netzwerkverteiler über die einzelnen weiteren Ein-/Ausgangs-Ports des weiteren Netzwerkverteilers über die an die weiteren Datenleitungen angeschlossenen Netzwerkteilnehmer ausgibt. Der Konfigurationsteilnehmer fährt dabei so lange fort, bis der Konfigurationsteilnehmer keine weiteren Netzwerkverteiler, die über die weiteren Datenleitungen an die einzelnen Ein-/Ausgangs-Ports des Netzwerkverteilers angeschlossen sind, mehr erfasst.

Neben dem Eintragen der Netzwerkteilnehmer-Information sowie der Port-Information in das Abfragetelegramm, kann auch vorgesehen sein, die Netzwerkteilnehmer-Information sowie die Port-Information mit dem Abfragetelegramm aus einem Register, also einer Speichereinheit des Protokoll-Netzwerkteilnehmers sowie des Netzwerkverteilers auszulesen und die ausgelesene Information an den Konfigurationsteilnehmer über die Datenleitung oder die empfangende Datenleitung zu übermitteln.

In einer weiteren Ausführungsform sind die Routing-Informationen im Netzwerkverteiler voreingestellt. Die Port-Information umfasst die Routing-Informationen. Der Netzwerkverteiler trägt die Port-Information in das Abfragetelegramm ein und sendet das Abfragetelegramm über die empfangende Datenleitung an den Konfigurationsteilnehmer zurück. Handelt sich das Automatisierungsnetzwerk zum Beispiel um ein Automatisierungsnetzwerk, in dem die Abfragetelegramme mit dem EtherCAT Datenübertragungsprotokoll versendet werden, so ist ein Routing zum Ansprechen eines einzelnen Protokoll-Netzwerkteilnehmers nicht erforderlich, da die Abfragetelegramme durch alle Protokoll-Netzwerkteilnehmer innerhalb eines Segments geroutet werden. In diesem Zusammenhang kann die jeweilige Routing-Information zum Beispiel eine Port-Adresse oder Segment-Adresse umfassen, über die der jeweilige weitere Ein-/Ausgangs-Port des Netzwerkverteilers oder das daran angeschlossene EtherCAT Segment ansprechbar ist und über den oder an das ein weiteres Abfragetelegramm ausgegeben werden soll. Insbesondere kann eine Voreinstellung der Routing-Information für weniger Aufwand sorgen.

Für die Strukturierung des EtherCAT Netzwerks in EtherCAT Segmente sind verschiedene Ausgestaltungen denkbar. Beispielsweise kann ein EtherCAT Segment an einem weiteren Ein-/Ausgangs-Port eines Netzwerkverteilers beginnen, über den nur Protokoll-Netzwerkteilnehmer angeschlossen sind. Weiterhin kann ein EtherCAT Segment an einem weiteren Ein-/Ausgangs-Port eines Netzwerkverteilers beginnen, über den Protokoll-Netzwerkteilnehmer sowie Netzwerkverteiler angeschlossen sind, wobei bei den Netzwerkverteilern dann ein weiterer Ein-/Ausgangs-Port dafür eingestellt sein muss. Überdies kann ein EtherCAT Segment bei dem Konfigurationsteilnehmer beginnen und bei dem nächsten Netzwerkverteiler enden. Zur Vereinfachung der Beschreibung der EtherCAT Segmente ist hierbei auf die Erläuterung der dazu gehörigen Datenleitungen verzichtet worden. Insbesondere kann eine Strukturierung der EtherCAT Segmente vorteilhaft nach erfolgter Erfassung der Netzwerkteilnehmer des Automatisierungsnetzwerks umgesetzt werden.

Gemäß einer weiteren Ausführungsform versendet der Konfigurationsteilnehmer, nach dem Empfangen des Abfragetelegramms mit der Port-Information von dem Netzwerkverteiler und vor dem Versenden der weiteren Abfragetelegramme, ein Konfigurationstelegramm über die Datenleitung an den Netzwerkverteiler, um den weiteren Ein-/Ausgangs-Ports des Netzwerkverteilers jeweils eine Routing-Information auf der Grundlage der Port-Information zuzuordnen. Die Zuordnung der Routing-Information nach dem Empfangen des Abfragetelegramms von dem Konfigurationsteilnehmer stellt eine individuelle und dynamische Einstellmöglichkeit der weiteren Ein-/Ausgangs-Ports des Netzwerkverteilers bereit, die insbesondere optimiert auf der Grundlage der bereits ermittelten Information erfolgen kann. Hierbei kann die Routing-Information ebenfalls in Form einer Port-Adresse oder einer Segment-Adresse ausgebildet sein.

In einer weiteren Ausführungsform legt der Konfigurationsteilnehmer ein Zeitfenster fest, in dem der Konfigurationsteilnehmer jeweils ein versandtes Abfragetelegramm zurückerwartet. Erhält der Konfigurationsteilnehmer kein Abfragetelegramm innerhalb des festgelegten Zeitfensters, so schließt der Konfigurationsteilnehmer die Datenleitung, auf die das Abfragetelegramm ausgegeben wurde, von einer weiteren Datenkommunikation aus. Dabei kann die Datenleitung auch in Form der empfangenden Datenleitung oder der weiteren Datenleitung ausgebildet sein und von einer weiteren Datenkommunikation ausgeschlossen werden. Das festgelegte Zeitfenster bietet einen Sicherungsmechanismus, bei dem eine Reaktion erwartet wird. Es kann zum Beispiel vorkommen, dass an einem bestimmten weiteren Ein-/Ausgangs-Port des Netzwerkverteilers, an der weiteren Datenleitung, zusätzlich zu einem oder mehreren Protokoll-Netzwerkteilnehmern ein Netzwerteilnehmer angeschlossen ist, der das Datenübertragungsprotokoll nicht verarbeitet. Hierbei sind auch einzelne Netzwerkteilnehmer oder mehrere Netzwerkteilnehmer, an einem bestimmten weiteren Ein-/Ausgangs-Port des Netzwerkverteilers angeschlossen, denkbar, die das Datenübertragungsprotokoll nicht verarbeiten. In den geschilderten Fällen erhält der Konfigurationsteilnehmer kein Abfragetelegramm von den Netzwerkteilnehmern zurück, da diese das Datenübertragungsprotokoll nicht verarbeiten können. Der Konfigurationsteilnehmer kann dann feststellen, dass die Netzwerkteilnehmer nicht als Protokoll-Netzwerkteilnehmer ausgebildet sind.

Schließt der Konfigurationsteilnehmer daraufhin die entsprechende Datenleitung von einer weiteren Datenkommunikation aus, so kann der Konfigurationsteilnehmer auf diese Weise ungewünschten Datenverkehr von diesen Netzwerkteilnehmern blockieren, der beispielsweise nicht für die Steuerungsaufgabe des Automatisierungssystems relevant ist. Beispielsweise kann das Ausschließen von einer weiteren Datenkommunikation in der Deaktivierung des entsprechenden Ein-/Ausgangs-Ports liegen, sodass keine Adressierung des entsprechenden Ein-/Ausgangs-Ports mehr möglich ist. Dabei kann die Deaktivierung derart erfolgen, dass der entsprechende Ein-/Ausgangs-Port mithilfe einer Schalter-Funktion des Netzwerkverteilers, die als Schalter ausgebildet sein kann, kurzgeschlossen wird. Daraufhin erfolgt keine Ausgabe der Telegramme auf dem entsprechenden Ein-/Ausgangs-Port mehr.

Dabei darf das festgelegte Zeitfenster nicht kleiner als eine Laufzeit eines Abfrage- und/oder Konfigurationstelegramms ausgebildet sein, wobei die Laufzeit einen Sendevorgang über die Datenleitung, eine Durchlaufverzögerungszeit, die sich aus einer Hardware-Durchlaufzeit, also der Durchlaufzeit durch den einzelnen Netzwerkteilnehmer ergibt, und einen Empfangsvorgang über die Datenleitung umfasst. Erfolgt die Übertragung eines Abfrage- und/oder Konfigurationstelegramms beispielsweise synchron zum Programmzyklus der SPS in einem EtherCAT Netzwerk, so wird das Abfrage- und/oder Konfigurationstelegramm mit der Zykluszeit des SPS-Programms gesendet. Die Laufzeit des Abfrage- und/oder Konfigurationstelegramms durch das EtherCAT Netzwerk ist dann kleiner als die Zykluszeit ausgebildet. Auch das festgelegte Zeitfenster ist demnach kleiner als die Zykluszeit ausgebildet, damit eine zügige Reaktion erwartet werden kann. Vorzugsweise befindet sich die Maschine oder Anlage des Automatisierungssystems zum Zeitpunkt der Erfassung der Netzwerkteilnehmer des Automatisierungsnetzwerks noch nicht in einem Steuerungszyklus.

Gemäß einer weiteren Ausführungsform umfasst die Netzwerkteilnehmer-Information eine Netzwerkteilnehmer-Kennung und eine Datenübertragungsrate des Protokoll-Netzwerkteilnehmers. Die Netzwerkteilnehmer-Kennung kann beispielsweise eine MAC-Adresse (MAC: Media Access Control) des Protokoll-Netzwerkteilnehmers sein. Auch denkbar ist, dass die Netzwerkteilnehmer-Kennung eine Position des Protokoll-Netzwerkteilnehmers oder einen Wert angibt, den der Protokoll-Netzwerkteilnehmer aufweist, falls an der jeweiligen Datenleitung eine Kette an Protokoll-Netzwerkteilnehmern angeordnet ist. Die Datenübertragungsrate der Netzwerkteilnehmer-Information gibt insbesondere dem benachbarten Netzwerkteilnehmer an, welche Datenmenge der Protokoll-Netzwerkteilnehmer in einer bestimmten Zeiteinheit über die entsprechende Datenleitung versenden kann. Dabei kann mithilfe einer Funktionalität des Protokoll-Netzwerkteilnehmers, einem sogenannten "Übertrager" oder "PHY" (PHY: von Physical Layer), der als Schaltkreis verwirklicht sein kann, eine Prüfung einer möglichen einzustellenden Datenübertragungsrate über die Datenleitung zu einem benachbarten Protokoll-Netzwerkteilnehmer erfolgen.

Sind die Datenübertragungsraten der einzelnen Protokoll-Netzwerkteilnehmer und der Netzwerkverteiler bekannt, so kann der Datenverkehr mittels Telegrammen im Steuerungsbetrieb des Automatisierungsnetzwerks dahingehend ausgelegt werden. Auch können auf diese Weise verschiedene Datenübertragungsraten für die Datenkommunikation der einzelnen Protokoll-Netzwerkteilnehmer in einer Kette oder der an den einzelnen Ein-/Ausgangs-Ports des Netzwerkverteilers in einer Kette an die weitere Datenleitung angeschlossenen Netzwerkteilnehmer im Automatisierungsnetzwerk bereitgestellt werden, da die weiteren Abfragetelegramme über die einzelnen weiteren Ein-/Ausgangs-Ports des Netzwerkverteilers parallel ausgegeben werden können. Jeder weitere Ein-/Ausgangs-Port des Netzwerkverteilers mit angeschlossenen weiteren Datenleitungen kann dabei in einem EtherCAT Automatisierungsnetzwerk beispielsweise als eigenständiges EtherCAT Segment gemäß oben stehender Erläuterung betrachtet werden.

In einem EtherCAT Automatisierungsnetzwerk lassen sich damit folglich EtherCAT Segmente mit einer ersten Datenübertragungsrate, die beispielsweise 100 Mbit/s beträgt, mit EtherCAT Segmenten mit einer zweiten Datenübertragungsrate, die beispielsweise 1 Gbit/s beträgt und/oder mit EtherCAT Segmenten mit einer dritten Übertragungsrate, die beispielsweise 10 Gbit/s beträgt, miteinander verbinden. Beispielsweise kann mithilfe eines Kopplerelements EK1400 der Firma Beckhoff Automation GmbH & Co. KG eine Geschwindigkeitsumsetzung der Datenübertragungsrate von 1 Gbit/s auf 100 Mbit/s erfolgen, und können weitere Kopplerelemente, beispielsweise des Typs EK1100 der Firma Beckhoff Automation GmbH & Co. KG daran angeschlossen werden. Wird ein Telegramm mit der zweiten Datenübertragungsrate mit 1 Gbit/s beispielsweise von dem Kopplerelement EK1400 empfangen und mit der ersten Datenübertragungsrate mit 100 Mbit/s weitergesendet, so kann das Telegramm aufgrund der höheren Empfangs- als der Sendegeschwindigkeit verzögerungsfrei weitergesendet werden. Vorzugsweise wird das Telegramm zunächst empfangen und in einer Speichereinheit, die beispielsweise als FIFO (FIFO: First In First Out) ausgebildet ist, zwischengespeichert, bevor das Telegramm mit der ersten Datenübertragungsrate weitergesendet wird.

Wird im umgekehrten Fall beispielsweise ein Telegramm mit der ersten Datenübertragungsrate mit 100 Mbit/s empfangen und mit der zweiten Datenübertragungsrate mit 1 Gbit/s weitergesendet, so muss das Telegramm, wenn es keine Längeninformation aufweist, vollständig empfangen und in der FIFO zwischengespeichert werden, bevor es mit der ersten Datenübertragungsrate mit 100 Mbit/s weitergesendet wird. Weist das Telegramm eine Längeninformation auf, so kann rechnerisch ermittelt werden, zu welchem Zeitpunkt eine ausreichende Datenmenge des Telegramms in Bytes empfangen worden ist, mit der bereits mit dem Sendevorgang des Telegramms begonnen werden kann.

Neben den beschriebenen Datenübertragungsraten sind auch alternative Datenübertragungsraten mit beispielsweise 2,5 Gbit/s oder 5 Gbit/s möglich. Die erläuterten Datenübertragungsraten entsprechen exemplarisch gewählten Werten und können auch davon abweichend verwirklicht sein.

In einer weiteren Ausführungsform umfasst die Port-Information eine Port-Kennung und eine Datenübertragungsrate des jeweiligen weiteren Ein-/Ausgangs-Ports des Netzwerkverteilers. Die Port-Kennung kann ein Symbol oder ein Wert des jeweiligen weiteren Ein-/Ausgangs-Port sein, an dem jeweils eine weitere Datenleitung angeschlossen ist. Ein-/Ausgangs-Ports, die für die weitere Datenkommunikation genutzt werden können, sind mithilfe der Port-Information leichter erkennbar. Auch kann für die weitere Datenkommunikation die Datenübertragungsrate rasch und einfach anhand der Port-Information eingestellt werden. Beispielsweise ermöglicht ein Netzwerkverteiler, der als sogenannter "Branch" und/oder als "Branch Controller" ausgebildet ist, eine einfache Verwaltung und Geschwindigkeitsumsetzung und bietet zudem die Möglichkeit an die über die einzelnen weiteren Ein-/Ausgangs-Ports angeschlossenen EtherCAT Segmente parallel weitere Abfragetelegramme auszugeben. Dabei können die einzelnen EtherCAT-Segmente an den weiteren Ein-/Ausgangs-Ports je nach angeschlossenen Netzwerkteilnehmern mit der ersten Datenübertragungsrate mit 100 Mbit/s als auch mit der zweiten Datenübertragungsrate mit 1 Gbit/s betrieben werden. Eine Steigerung der Datenübertragungsrate kann zu einem höheren Datendurchsatz führen. Aufgrund der höheren, zweiten Datenübertragungsrate mit 1 Gbit/s (bzw. der dritten Datenübertragungsrate mit 10 Gbit/s) kann die Laufzeit der Abfragetelegramme und/oder des Konfigurationstelegramms im Vergleich zur ersten Datenübertragungsrate reduziert werden und auf diese Weise verkürzte Zykluszeiten im Steuerungsbetrieb erreicht werden.

Ein Protokoll-Netzwerkteilnehmer, der das EtherCAT Datenübertragungsprotokoll verarbeitet und ausgelegt ist, eine Datenkommunikation mit der zweiten Datenübertragungsrate mit 1 Gbit/s umzusetzen sowie ein Netzwerkverteiler, der als Branch ausgebildet ist, sind vorteilhafterweise derart ausgelegt, sowohl eine Datenkommunikation mit der zweiten Datenübertragungsrate mit 1 Gibt/s als auch mit der ersten Datenübertragungsrate mit 100 Mbit/s umzusetzen. Gleiches kann für den Konfigurationsteilnehmer gelten. Der Konfigurationsteilnehmer und der als Branch ausgebildete Netzwerkverteiler prüfen für eine Datenkommunikation über die Datenleitung bzw. die weiteren Datenleitungen mithilfe des Übertragers beispielsweise zunächst, ob die Protokoll-Netzwerkteilnehmer bzw. Netzwerkverteiler die zweite Datenübertragungsrate umsetzen können, die höher als die erste Datenübertragungsrate ausgebildet ist. Wenn dies nicht der Fall ist, das heißt, wenn mit dem Übertrager nur die erste Datenübertragungsrate für die Datenkommunikation übermittelt werden kann, so stellen der Konfigurationsteilnehmer und der Branch jeweils die erste Datenübertragungsrate für die Datenkommunikation ein.

Gemäß einer weiteren Ausführungsform sind die Abfragetelegramme und das Konfigurationstelegramm als Telegramme mit zugrundeliegendem EtherCAT Datenübertragungsprotokoll ausgebildet. Auf diese Weise kann der Konfigurationsteilnehmer vorteilhaft Protokoll-Netzwerkteilnehmer ermitteln, die das EtherCAT Datenübertragungsprotokoll verarbeiten. Diese Protokoll-Netzwerkteilnehmer können dazu vorgesehen sein, Steuerungsaufgaben im laufenden Betrieb des Automatisierungsnetzwerks auszuführen oder Daten auszuwerten und/oder bereitzustellen, die von dem Konfigurationsteilnehmer für die Steuerungsaufgabe benötigt werden.

Weiterhin werden ein Konfigurationsteilnehmer und ein Netzwerkverteiler vorgeschlagen, die ausgebildet sind, das Verfahren zum Erfassen von Netzwerkteilnehmern auszuführen. Mithilfe des Konfigurationsteilnehmers und des Netzwerkverteilers, der beispielsweise als Branch ausgebildet sein kann, kann die Kompatibilität der Protokoll-Netzwerkteilnehmer und der Netzwerkverteiler im Automatisierungssystems verbessert werden. Insbesondere kann der als Branch ausgebildete Netzwerkverteiler der Geschwindigkeitsumsetzer für unterschiedliche im Automatisierungsnetzwerk ausgebildete Datenübertragungsraten sein.

Die Telegramme, die vom Branch mit der zweiten Datenübertragungsrate empfangen und mit der ersten Datenübertragungsrate weitergesendet werden, können vom Branch empfangen, in der FIFO zwischengespeichert und weitergesendet werden. Bei den Telegrammen, die vom Branch mit der ersten Datenübertragungsrate empfangen werden, ist es erforderlich diese zunächst vollständig zu empfangen und zwischenzuspeichern, wenn die Telegramme keine Längeninformation aufweisen. Weisen die Telegramme eine Längeninformation auf, so müssen sie nicht vollständig empfangen werden, sondern es kann der Zeitpunkt ermittelt werden, zu dem die Telegramme bereits vor dem vollständigen Empfang weitergesendet werden können.

Der Branch kann Ein-/Ausgangs-Ports aufweisen, die die zweite Datenübertragungsrate mit 1 Gbit/s und/oder die dritte Datenübertragungsrate mit 10 Gbit/s auf den entsprechenden weiteren Datenleitungen umsetzen können. Alternativ dazu sind auch weitere Ein-/Ausgangs-Ports mit abweichenden Datenübertragungsraten denkbar. Dies kann die Grundlage für neue Anwendungsgebiete schaffen, bei denen bislang an die Kapazitätsgrenzen gestoßen wurde. Beispielsweise können komplexe Anwendungen, Hochleistungsmaschinen und allgemein hohe Datenmengen produzierende Anwendungen, zum Beispiel aufgrund der exakten Synchronisation vieler gekoppelter Achsen, die dynamisch verfahren werden müssen, problemlos in das Automatisierungsnetzwerk integriert werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 einen schematischen Ablauf eines Verfahrens zum Erfassen von Netzwerkteilnehmern in einem Automatisierungsnetzwerk mittels Abfragetelegrammen;
Figur 2 einen schematischen Aufbau des Automatisierungsnetzwerks mit den anhand des in Figur 1 dargestellten Verfahrens ermittelten Netzwerkteilnehmern.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

Automatisierungsnetzwerke sind üblicherweise als Feldbussysteme verwirklicht, bei denen die Netzwerkeilnehmer, die Protokoll-Netzwerkteilnehmer und Netzwerkverteiler umfassen, über den Feldbus miteinander vernetzt sind. Die Protokoll-Netzwerkteilnehmer können ausgelegt sein ein bestimmtes Datenübertragungsprotokoll zu verarbeiten. Protokoll-Netzwerkteilnehmer und Netzwerkverteiler können mit Steuerungseinheiten Daten austauschen, wobei dazu in der Regel echtzeitfähige Datenübertragungsprotokolle eingesetzt werden. Daneben kann das Automatisierungsnetzwerk auch Netzwerkteilnehmer aufweisen, die andere Datenübertragungsprotokolle verarbeiten können wie beispielsweise TCP/IP (TCP/IP: Transmission Control Protocol/Internet Protocol), Ethernet, etc. Diese Netzwerkteilnehmer müssen nicht für Steuerungsaufgaben adressiert sein. Beispielsweise können diese Datenübertragungsprotokoll-Daten Diagnoseinformationen über das Automatisierungsnetzwerk umfassen. Die Erfindung wird nachfolgend beispielhaft anhand des echtzeitfähigen EtherCAT Datenübertragungsprotokolls erläutert.

Die Zugriffsberechtigung für das Feldbussystem beruht dabei auf der Master-Slave-Hierarchie. Die aktiven Busteilnehmer, die auch als Master-Netzwerkteilnehmer bezeichnet werden, entsprechen den Steuereinheiten, die die Übertragung von Daten auf dem Feldbus bestimmen und koordinieren. Die passiven Busteilnehmer, die Slave-Netzwerkteilnehmer genannt werden und keine eigene Buszugriffsberechtigung besitzen, bilden dagegen die Geräte der Maschinenperipherie und dürfen im EtherCAT Netzwerk Informationen in die Telegramme einfügen und diese Telegramme an den Master-Netzwerkteilnehmer zurück versenden. Die über die einzelnen Datenleitungen im Automatisierungsnetzwerk angeschlossenen Netzwerkteilnehmer sind über Netzwerkverteiler, sogenannte "Switche" oder "Branche" verbunden. Die Netzwerkverteiler dienen zudem dazu, den Datenaustausch der Teilnehmer in den Netzwerksegmenten zu koordinieren und die Telegramme rechtzeitig an ihr Ziel zu leiten.

Die Kernidee der vorliegenden Erfindung liegt - bei unbekanntem Aufbau des Automatisierungsnetzwerks - darin, mithilfe von einem Masternetzwerkteilnehmer bzw. von einem Konfigurationsteilnehmer versendeter Abfragetelegramme die in dem Automatisierungsnetzwerk befindlichen Netzwerkteilnehmer schrittweise zu erfassen. Darauf aufbauend kann eine Konfiguration sowie eine Strukturierung des Automatisierungsnetzwerks nach bestimmten Kriterien erfolgen, um den Durchsatz im Automatisierungsnetzwerk zu erhöhen.

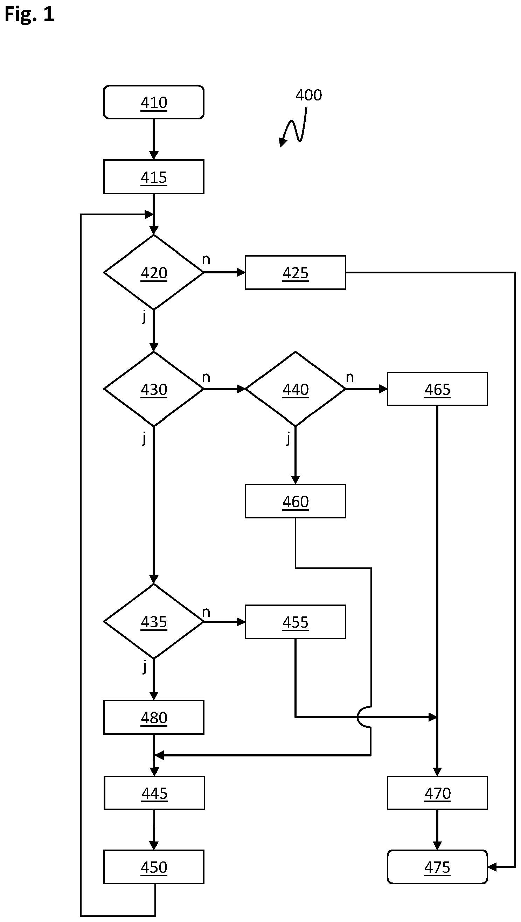

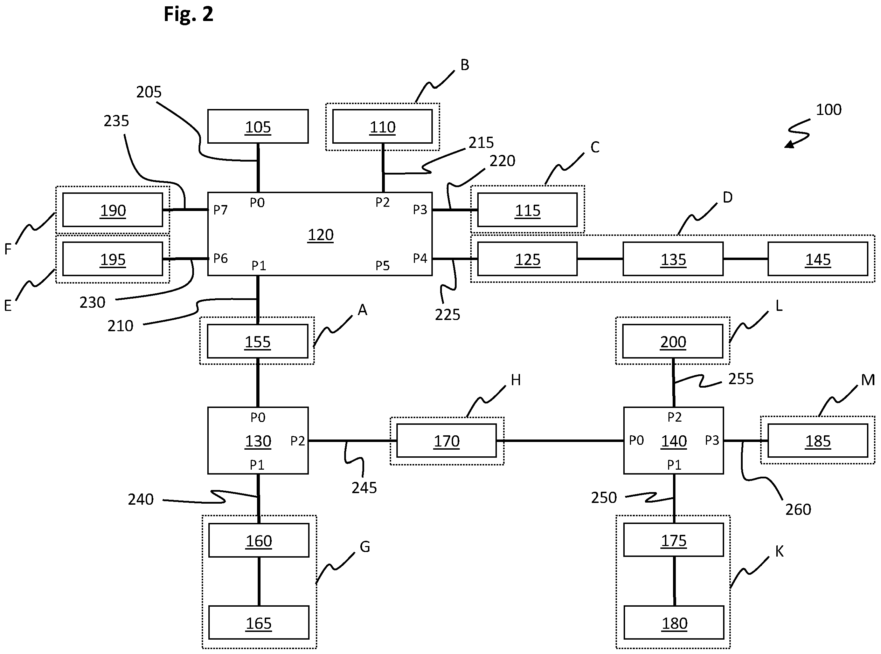

Der Aufbau und die Funktionsweise des erfindungsgemäßen Automatisierungsnetzwerks und des Verfahrens wird nachfolgend anhand der Figuren 1 und 2 beschrieben, wobei in der Beschreibung, sofern sinnvoll und erforderlich, die zugehörigen Bezugszeichen aus beiden Figuren Verwendung finden.

Figur 1 zeigt ein Ablaufdiagramm 400 eines Verfahrens zum Erfassen von Netzwerkteilnehmern in einem Automatisierungsnetzwerk 100 mittels Abfragetelegrammen. Am Start 410 des Verfahrens befindet sich ein Konfigurationsteilnehmer 105. Der Konfigurationsteilnehmer 105 versendet in einem ersten Schritt 415 ein Abfragetelegramm an einen über die Datenleitung angeschlossenen Netzwerkteilnehmer. Zudem legt der Konfigurationsteilnehmer 105 ein Zeitfenster fest, in dem der Konfigurationsteilnehmer 105 das Abfragetelegramm wieder über die Datenleitung zurückerwartet. Dabei kann der Konfigurationsteilnehmer 105 das Zeitfenster so festlegen, dass das Zeitfenster nicht kleiner als eine Laufzeit des Abfragetelegramms ausgebildet ist, wobei die Laufzeit einen Sendevorgang über die Datenleitung, eine Durchlaufverzögerungszeit, die sich aus einer Hardware-Durchlaufzeit, also der Durchlaufzeit durch den einzelnen Netzwerkteilnehmer ergibt, und einen Empfangsvorgang über die Datenleitung umfasst. Zudem kann der Konfigurationsteilnehmer 105 das Zeitfenster kleiner als die Zykluszeit festlegen, wenn das Abfragetelegramm beispielsweise mit der Zykluszeit des SPS-Programms gesendet wird, da dann die Laufzeit des Abfragetelegramms kleiner als die Zykluszeit ausgebildet ist.

Ist der an der Datenleitung angeschlossene Netzwerkteilnehmer, der das Abfragetelegramm empfängt als Protokoll-Netzwerkteilnehmer ausgebildet, also beispielsweise als Slave-Netzwerkteilnehmer, so liest der Protokoll-Netzwerkteilnehmer die an ihn adressierten Daten im Abfragetelegramm und legt die Ausgangsdaten des Protokoll-Netzwerkteilnehmers, zum Beispiel in Form einer Netzwerkteilnehmer-Information, in das Abfragetelegramm. Dies kann in Form eines aktiven Eintragens der Netzwerkteilnehmer-Information in das Abfragetelegramm erfolgen oder als Auslesen der in einem bestimmten adressierten Speicherbereich des Protokoll-Netzwerkteilnehmers befindlichen Netzwerkteilnehmer-Information und Übermittlung der ausgelesenen Netzwerkteilnehmer-Information an den Konfigurationsteilnehmer.

Erkennt der Protokoll-Netzwerkteilnehmer, dass kein nachfolgender Netzwerkteilnehmer an einer weiteren als der empfangenden Datenleitung angeschlossen ist, so sendet der Protokoll-Netzwerkteilnehmer das Abfragetelegramm über die empfangende Datenleitung an den Konfigurationsteilnehmer zurück, andernfalls sendet der Protokoll-Netzwerkteilnehmer das Abfragetelegramm an den nachfolgend an der weiteren Datenleitung angeschlossenen Netzwerkteilnehmer. Sind an der Datenleitung zum Beispiel mehrere Protokoll-Netzwerkteilnehmer in einer Kette angeschlossen, so kann der letzte Protokoll-Netzwerkteilnehmer in der Kette einen ungenutzten Ein-/Ausgangs-Port am Protokoll-Netzwerkteilnehmer erkennen, an dem kein nachfolgender Protokoll-Netzwerkteilnehmer angeschlossen ist. Beispielsweise kann ein ungenutzter Ein-/Ausgangs-Port des Protokoll-Netzwerkteilnehmers, wenn dieser als EtherCAT-Netzwerkteilnehmer ausgebildet ist, mithilfe einer Schalter-Funktion des Protokoll-Netzwerkteilnehmers, die als Schalter ausgebildet sein kann, kurzgeschlossen und damit deaktiviert sein. Weist die Datenleitung, in der Betrachtungsweise von dem Konfigurationsteilnehmer 105 ausgehend, beispielsweise eine TX-Leitung zum Versenden des Abfragetelegramms und eine RX-Leitung zum Empfangen des Abfragetelegramms (TX: Transmitter, RX: Receiver) auf, so wird das Abfragetelegramm von dem letzten EtherCAT-Netzwerkteilnehmer in der Kette über den kurzgeschlossenen, ungenutzten Ein-/Ausgangs-Port des EtherCAT-Netzwerkteilnehmers, der mit der TX-Leitung verbunden ist, über die RX-Leitung an den Konfigurationsteilnehmer zurückgesendet.

Die Netzwerkteilnehmer-Information kann eine Netzwerkteilnehmer-Kennung sowie eine Datenübertragungsrate des Protokoll-Netzwerkteilnehmers umfassen. Die Netzwerkteilnehmer-Information und die Datenübertragungsrate können jeweils einen Eintrag in einer Speichereinheit des Protokoll-Netzwerkteilnehmers bilden. Beispielsweise kann die Netzwerkteilnehmer-Kennung in Form einer MAC-Adresse (MAC: Media Access Control) ausgebildet sein und den Protokoll-Netzwerkteilnehmer eindeutig als solchen im Automatisierungsnetzwerk 100 kennzeichnen. Auch ist denkbar, dass die Netzwerkteilnehmer-Kennung in Form einer Positionsangabe des Protokoll-Netzwerkteilnehmers, bei mehreren in einer Kette angeordneten Protokoll-Netzwerkteilnehmern verwirklicht ist. Darüber hinaus sind auch alternative Kennzeichnungsmöglichkeiten des Protokoll-Netzwerkteilnehmers anhand der Netzwerkteilnehmer-Kennung mithilfe eines Werts, eines Symbols, etc. möglich.

Die Datenübertragungsrate der Netzwerkteilnehmer-Information gibt an, welche Datenmenge der Protokoll-Netzwerkteilnehmer innerhalb einer bestimmten Zeiteinheit über die Datenleitung versenden kann. Dies kann die erste Datenübertragungsrate mit 100 Mbit/s oder die zweite Datenübertragungsrate mit 1 Gibt/s oder die dritte Datenübertragungsrate mit 10 Gbit/s sein, wobei der Protokoll-Netzwerkteilnehmer, der ausgelegt ist, die zweite Datenübertragungsrate mit 1 Gbit/s oder die dritte Datenübertragungsrate mit 10 Gibt/s für die Datenkommunikation umzusetzen, auch in der Lage ist die erste Datenübertragungsrate mit 100 Mbit/s für die Datenkommunikation einzustellen. Neben den dargestellten Datenübertragungsraten sind auch alternative Datenübertragungsraten mit beispielsweise 2,5 Gbit/s oder 5 Gbit/s möglich. Die erläuterten Datenübertragungsraten entsprechen exemplarisch gewählten Werten und können auch davon abweichend verwirklicht sein. Die Prüfung der einzustellenden Datenübertragungsrate kann dabei mithilfe eines sogenannten "Übertragers", einem "PHY" (PHY: von Physical Layer), der als Schaltkreis im Protokoll-Netzwerkteilnehmer verwirklicht sein kann, erfolgen. In einer Kette an Protokoll-Netzwerkteilnehmern, die an die Datenleitung angeschlossen sind, kann der Konfigurationsteilnehmer 105 die Datenübertragungsrate für alle Protokoll-Netzwerkteilnehmer einheitlich auf die erste Datenübertragungsrate für die Datenkommunikation setzen, wenn in der Kette zum Beispiel ein Protokoll-Netzwerkteilnehmer an die Datenleitung angeschlossen ist, der nur für eine Datenkommunikation mit der ersten Datenübertragungsrate ausgelegt ist. Dies kann der Konfigurationsteilnehmer 105 beispielsweise mithilfe eines Konfigurationstelegramms für die einzelnen Protokoll-Netzwerkteilnehmer einstellen.

Hat ein an der Datenleitung angeschlossener Netzwerkverteiler das Abfragetelegramm des Konfigurationsteilnehmers 105 auf einem ersten Ein-/Ausgangs-Port empfangen, so trägt der Netzwerkverteiler eine Port-Information über die weiteren Ein-/Ausgangs-Ports des Netzwerkverteilers, an die weitere Datenleitungen angeschlossen sind, in das Abfragetelegramm ein und sendet das Abfragetelegramm über die empfangende Datenleitung an den Konfigurationsteilnehmer 105 zurück. Die Port-Information kann dabei eine Port-Kennung sowie eine Datenübertragungsrate, für die der jeweilige weitere Ein-/Ausgangs-Port für die Datenkommunikation ausgelegt ist, umfassen. Zudem kann der Netzwerkverteiler auch eine Netzwerkverteiler-Kennung, die wie die Netzwerkteilnehmer-Kennung als MAC-Adresse, als Wert, als Symbol, etc. ausgebildet sein kann, in das Abfragetelegramm eintragen. Die Port-Kennung kann ein Symbol oder ein Wert des jeweiligen weiteren Ein-/Ausgangs-Port sein, an dem jeweils eine weitere Datenleitung angeschlossen ist. Neben den weiteren Ein-/Ausgangs-Ports, an denen weitere Datenleitungen angeschlossen sind, kann der Netzwerkverteiler auch Ein-/Ausgangs-Ports aufweisen, an denen keine weitere Datenleitung angeschlossen ist. Diese Ein-/Ausgangs-Ports können mithilfe einer Schalter-Funktionalität des Netzwerkverteilers, die als ein Schalter ausgebildet ist, kurzgeschlossen und damit deaktiviert sein, analog zur Beschreibung der Ein-/Ausgangs-Ports eines Protokoll-Netzwerkteilnehmers.

Ferner ist denkbar weitere Ein-/Ausgangs-Ports des Netzwerkverteilers gezielt zu deaktivieren, wenn es auf einer Datenleitung in dem Automatisierungsnetzwerk beispielsweise eine Kommunikationsstörung gibt. Durch schrittweises manuelles Deaktivieren, also Kurzschließen der einzelnen weiteren Ein-/Ausgangs-Ports des Netzwerkverteilers mithilfe des Schalters, kann geprüft werden auf welchen weiteren Ein-/Ausgangs-Ports die Telegramme auf den weiteren Ein-/Ausgangs-Ports zurückerhalten werden und auf welchem weiteren Ein-/Ausgangs-Port nicht und die Kommunikationsstörung damit lokalisiert werden. Dies schafft also eine verbesserte Diagnosemöglichkeit im Falle im Automatisierungsnetzwerk auftretender Störungen.

Die Port-Kennung sowie die Datenübertragungsrate der einzelnen weiteren Ein-/Ausgangs-Ports des Netzwerkverteilers sowie die Netzwerkverteiler-Kennung können jeweils einen Eintrag in der Speichereinheit des Netzwerkverteilers bilden. Neben dem Eintragen dieser Informationen in das Abfragetelegramm, kann der Netzwerkverteiler auch dazu ausgelegt sein, die mit dem Abfragetelegramm adressierten Speicherbereiche aus der Speichereinheit des Netzwerkverteilers auszulesen und die ausgelesene Information über die empfangende Datenleitung an den Konfigurationsteilnehmer 105 zurückzusenden.

Sind die Datenübertragungsraten der einzelnen weiteren Ein-/Ausgangs-Ports des Netzwerkverteilers bekannt, so kann der Datenverkehr mittels Telegrammen im Steuerungsbetrieb des Automatisierungsnetzwerks dahingehend ausgelegt werden. Auch können hierbei für die einzelnen weiteren Ein-/Ausgangs-Ports und die an die weiteren Datenleitungen angeschlossenen Netzwerkteilnehmer verschiedene Datenübertragungsraten für die Datenkommunikation verwirklicht werden, je nach der Auslegung der angeschlossenen Netzwerkteilnehmer. Die einzelnen weiteren Abfragetelegramme können dabei parallel über die jeweiligen weiteren Ein-/Ausgangs-Ports des Netzwerkverteilers über die weiteren Datenleitungen ausgegeben werden, um die Durchlaufzeit der weiteren Abfragetelegramme zu reduzieren und eine schnellere Datenkommunikation zu ermöglichen. Jeder weitere Ein-/Ausgangs-Port des Netzwerkverteilers mit angeschlossenen weiteren Datenleitungen und daran angeschlossenen Protokoll-Netzwerkteilnehmern und/oder Netzwerkverteilern kann dabei in einem EtherCAT Automatisierungsnetzwerk beispielsweise gemäß obiger Erläuterung als eigenständiges EtherCAT Segment betrachtet werden.

Demnach lassen sich in einem EtherCAT Automatisierungsnetzwerk EtherCAT Segmente, die für eine Datenkommunikation mit der ersten Datenübertragungsrate mit 100 Mbit/s ausgelegt sind, mit EtherCAT Segmenten, die für eine Datenkommunikation mit der zweiten Datenübertragungsrate mit 1 Gbit/s ausgelegt sind und/oder mit EtherCAT Segmenten, die für die Datenkommunikation mit der dritten Übertragungsrate mit 10 Gbit/s ausgelegt sind, miteinander verbinden. Beispielsweise kann mithilfe eines als "Branch" ausgebildeten Netzwerkverteilers der Firma Beckhoff Automation GmbH & Co. KG eine Geschwindigkeitsumsetzung der Datenkommunikation von der zweiten Datenübertragungsrate mit 1 Gbit/s auf die erste Datenübertragungsrate mit 100 Mbit/s erfolgen. Dies kann beispielsweise verwirklicht werden, wenn an den jeweiligen Ein-/Ausgangs-Port des Netzwerkverteilers in einem EtherCAT Segment angeschlossenen Protokoll-Netzwerkteilnehmer nur für die Datenkommunikation mit der ersten Datenübertragungsrate ausgelegt sind oder ein Protokoll-Netzwerkteilnehmer in dem EtherCAT Segment angeordnet ist, der nur mit der ersten Datenübertragungsrate Daten übertragen kann. Jedoch brauchen in dem genannten Fall nicht sämtliche, an den weiteren Ein-/Ausgangs-Ports des Netzwerkverteilers angeschlossenen EtherCAT-Segmente, für die Datenkommunikation mit der ersten Datenübertragungsrate betrieben werden.

Für die Datenkommunikation prüft der Netzwerkverteiler und der Konfigurationsteilnehmer 105 mithilfe des Übertragers, ob eine Einstellung der zweiten Datenübertragungsrate und/oder der dritten Datenübertragungsrate zwischen den an der Datenleitung angeschlossenen Protokoll-Netzwerkteilnehmern und/oder weiteren Netzwerkverteilern möglich ist, und stellt gegebenenfalls sonst die erste, niedrigere Datenübertragungsrate ein.

Damit der Netzwerkverteiler weitere Abfragetelegramme über die einzelnen weiteren Ein-/Ausgangs-Ports des Netzwerkverteilers ausgeben kann, um die an den weiteren Ein-/Ausgangs-Ports über weitere Datenleitungen angeschlossene Netzwerkteilnehmer, die Protokoll-Teilnehmer und Netzwerkverteiler umfassen können, gezielt erfassen zu können, benötigt der Netzwerkverteiler eine Zuordnungs-Möglichkeit der weiteren Abfragetelegramme zu den einzelnen weiteren Ein-/Ausgangs-Ports des Netzwerkverteilers. Diese Zuordnungs-Möglichkeit kann die jeweilige Routing-Information bilden. Diese kann beispielsweise als Ein-/Ausgangs-Port Adresse, als Segment-Adresse im Falle eines EtherCAT Netzwerks, als Wert, als Symbol, etc. ausgebildet sein und auf der Grundlage der Port-Information ausgelegt sein. Zusätzlich ist denkbar, dass die Port-Information die jeweiligen Routing-Informationen umfasst. Der Konfigurationsteilnehmer 105 kann beispielsweise die Routing-Informationen im Netzwerkverteiler voreinstellen.

Daneben kann der Konfigurationsteilnehmer 105 die Routing-Informationen auf der Grundlage der in dem Abfragetelegramm von dem Netzwerkverteiler übermittelten Port-Information erstellen und den einzelnen weiteren Ein-/Ausgangs-Ports des Netzwerkverteilers, an die die weiteren Datenleitungen angeschlossen sind, die Routing-Informationen mithilfe eines Konfigurationstelegramms zuordnen, beispielsweise als Eintrag in der Speichereinheit des Netzwerkverteilers. Die weiteren Abfragetelegramme können dann jeweils die Routing-Information aufweisen und beim Empfang der weiteren Abfragetelegramme auf einem ersten Ein-/Ausgangs-Port des Netzwerkverteilers mit dem Eintrag der Routing-Information in der Speichereinheit von dem Netzwerkverteiler abgeglichen werden, um den der in der Speichereinheit der Routing-Information zugeordneten weiteren Ein-/Ausgangs-Port des Netzwerkverteilers zu ermitteln, über den die weiteren Abfragetelegramme jeweils ausgegeben werden. Die Abfragetelegramme sowie das Konfigurationstelegramm sind in einem EtherCAT Netzwerk als EtherCAT Telegramme, also mit zugrundeliegendem EtherCAT Datenübertragungsprotokoll ausgebildet, um die EtherCAT Protokoll-Netzwerkteilnehmer und Netzwerkverteiler, die das EtherCAT Datenübertragungsprotokoll verarbeiten, in dem EtherCAT Netzwerk erfassen und konfigurieren zu können.

Der Konfigurationsteilnehmer 105 prüft mittels einer ersten Verzweigung 420 in Figur 1, ob der Konfigurationsteilnehmer 105 das über die Datenleitung versendete Abfragetelegramm oder das über die weitere Datenleitung versendete Abfragetelegramm oder, aus der Perspektive des Netzwerkteilnehmers, das über die empfangende Datenleitung erhaltene Abfragetelegramm von dem Netzwerkteilnehmer innerhalb des festgelegten Zeitfensters zurück erhalten hat. Ist dies nicht der Fall (in Figur 1 als n gekennzeichnet, wobei hierauf nachfolgend nicht mehr eingegangen wird), so geht der Konfigurationsteilnehmer 105 davon aus, dass es sich bei dem Netzwerkteilnehmer um keinen Protokoll-Netzwerkteilnehmer handelt, der das bestimmte Datenübertragungsprotokoll, zum Beispiel das EtherCAT Datenübertragungsprotokoll, verarbeitet. Für den Steuerungsbetrieb des EtherCAT Netzwerks sind jedoch nur EtherCAT Netzwerkteilnehmer bzw. Netzwerkverteiler, die das EtherCAT Datenübertragungsprotokoll unterstützen, relevant, daher schließt der Konfigurationsteilnehmer 105 die Datenleitung oder die weitere Datenleitung oder die empfangende Datenleitung, über die der Konfigurationsteilnehmer 105 das Abfragetelegramm ausgegeben, aber nicht innerhalb des festgelegten Zeitfensters zurückerhalten hat, in einem zweiten Schritt 425 in Figur 1 von einer weiteren Datenkommunikation aus. Der Konfigurationsteilnehmer 105 sendet also kein weiteres Abfragetelegramm mehr über die entsprechende Datenleitung oder über die weitere Datenleitung oder über die empfangende Datenleitung und schließt den entsprechenden Ein-/Ausgangs-Port oder den entsprechenden weiteren Ein-/Ausgangs-Port mithilfe des Schalters kurz. In Figur 1 ist damit das Ende 475 erreicht.

Empfängt der Konfigurationsteilnehmer 105 hingegen das Abfragetelegramm von dem Netzwerkteilnehmer über die Datenleitung oder die weitere Datenleitung oder die empfangende Datenleitung innerhalb des festgelegten Zeitfensters wieder zurück (in Figur 1 mit j gekennzeichnet, wobei hierauf nachfolgend nicht mehr eingegangen wird), so prüft der Konfigurationsteilnehmer 105 mittels einer zweiten Verzweigung 430, ob das empfangene Abfragetelegramm mehrere Netzwerkteilnehmer-Informationen aufweist. Ist dies nicht der Fall, so prüft der Konfigurationsteilnehmer 105 mithilfe einer vierten Verzweigung 440, ob das empfangene Abfragetelegramm eine Port-Information aufweist. Weist das empfangene Abfragetelegramme also nicht mehrere Netzwerkteilnehmer-Informationen und auch keine Port-Information auf, so erkennt der Konfigurationsteilnehmer 105 in einem achten Schritt 465 einen einzelnen Protokoll-Netzwerkteilnehmer aufgrund einer einzelnen Netzwerkteilnehmer-Information in dem empfangenen Abfragetelegramm. Da der Protokoll-Netzwerkteilnehmer keine Port-Information einträgt, weiß der Konfigurationsteilnehmer 105, dass das Abfragetelegramm von einem Protokoll-Netzwerkteilnehmer verarbeitet worden ist. Der Konfigurationsteilnehmer 105 kann den Protokoll-Netzwerkteilnehmer gegebenenfalls noch konfigurieren. Aufgrund der erhaltenen Netzwerkteilnehmer-Information ist der Protokoll-Netzwerkteilnehmer in einem neunten Schritt 470 für den herkömmlichen Telegrammverkehr im Steuerungsbetrieb des Automatisierungsnetzwerks 100 ansprechbar. Das Verfahren zum Erfassen der Protokoll-Netzwerkteilnehmer ist damit schließlich am Ende 475.

Kann der Konfigurationsteilnehmer 105 in der zweiten Verzweigung 430 beim Auswerten des empfangenen Abfragetelegramms mehrere Netzwerkteilnehmer-Informationen erkennen, so prüft der Konfigurationsteilnehmer 105 mittels einer dritten Verzweigung 435, ob das empfangene Abfragetelegramm zusätzlich zu den mehreren Netzwerkteilnehmer-Informationen auch eine Port-Information aufweist. Weist das empfangene Abfragetelegramm keine Port-Information auf, so erkennt der Konfigurationsteilnehmer 105 in einem sechsten Schritt 455 mehrere Protokoll-Netzwerkteilnehmer aufgrund der im Abfragetelegramm enthaltenen mehrerer Netzwerkteilnehmer-Informationen in einer Kette angeordnet und an die Datenleitung angeschlossen. Die erkannten mehreren Protokoll-Netzwerkteilnehmer sind schließlich anhand der Netzwerkteilnehmer-Informationen in dem neunten Schritt 470 für den herkömmlichen Telegrammverkehr im Steuerungsbetrieb des Automatisierungsnetzwerks 100 ansprechbar.

Kann der Konfigurationsteilnehmer 105 in der dritten Verzweigung 435 im empfangenen Abfragetelegramm zusätzlich zu den mehreren Netzwerkteilnehmer-Informationen zumindest eine Port-Information feststellen, so erkennt der Konfigurationsteilnehmer 105 in einem dritten Schritt 480 zumindest einen Netzwerkverteiler und mehrere Protokoll-Netzwerkteilnehmer. Der Konfigurationsteilnehmer 105 kann in einem vierten Schritt 445 die Routing-Information für die einzelnen Ein-/Ausgangs-Ports des Netzwerkverteilers, an die weitere Datenleitungen angeschlossen sind, auf der Grundlage der Port-Information erstellen und den einzelnen Ein-/Ausgangs-Ports des Netzwerkverteilers die Routing-Information zuordnen. In einem fünften Schritt 450 können dann von dem Konfigurationsteilnehmer 105 weitere Abfragetelegramme mit der Routing-Information über den der Routing-Information jeweils zugeordneten weiteren Ein-/Ausgangs-Port des Netzwerkverteilers über die an die weiteren Datenleitungen angeschlossenen Netzwerkteilnehmer ausgegeben werden, um diese erfassen zu können. Dabei kann der Konfigurationsteilnehmer 105 die weiteren Abfragetelegramme parallel über die einzelnen weiteren Ein-/Ausgangs-Ports des Netzwerkverteilers ausgeben.

Dabei kann der Konfigurationsteilnehmer 105 für die weiteren Abfragetelegramme weitere Zeitfenster festlegen, innerhalb derer der Konfigurationsteilnehmer 105 die weiteren Abfragetelegramme zurückerwartet oder das bereits festgelegte Zeitfenster auch für die weiteren Abfragetelegramme nutzen.

Der Konfigurationsteilnehmer 105 prüft für die weiteren Abfragetelegramme wiederum mit der ersten Verzweigung 420, ob der Konfigurationsteilnehmer 105 die weiteren Abfragetelegramme jeweils innerhalb des festgelegten Zeitfensters empfangen hat. Auch kann der Konfigurationsteilnehmer 105 in diesem Zusammenhang jede der weiteren Datenleitungen, die über die einzelnen weiteren Ein-/Ausgangs-Ports des Netzwerkverteilers angeschlossen sind, über die der Konfigurationsteilnehmer 105 jeweils ein weiteres Abfragetelegramm nicht innerhalb des festgelegten Zeitfensters zurückerhalten hat, separat von einer weiteren Datenkommunikation ausschließen, indem der Konfigurationsteilnehmer 105 den jeweiligen weiteren Ein-/Ausgangs-Port des Netzwerkverteilers deaktiviert. Die weiteren Prüfungsschritte sind dann analog zur obigen Beschreibung ausgebildet, wobei für jedes einzelne weitere Abfragetelegramm von dem Konfigurationsteilnehmer 105 eine separate Prüfung vorgenommen wird, um die einzelnen Netzwerkteilnehmer erfassen zu können.

Weist das empfangene Abfragetelegramm in der vierten Verzweigung 440 keine mehreren Netzwerkteilnehmer-Informationen auf, jedoch eine Port-Information, so erkennt der Konfigurationsteilnehmer 105 einen Netzwerkverteiler in einem siebten Schritt 460 anhand der Port-Information als solchen. Der Konfigurationsteilnehmer 105 kann dann die Routing-Information für die einzelnen Ein-/Ausgangs-Ports des Netzwerkverteilers auf der Grundlage der Port-Information erstellen und diese den einzelnen Ein-/Ausgangs-Ports des Netzwerkverteilers in dem vierten Schritt 445 zuordnen. Schließlich kann der Konfigurationsteilnehmer 105 mit dem fünften Schritt 450 fortfahren und für die weiteren Abfragetelegramme mit der ersten Verzweigung 420 prüfen, ob der Konfigurationsteilnehmer 105 die weiteren Abfragetelegramme jeweils innerhalb des festgelegten Zeitfensters erhalten hat (vgl. obige Erläuterung zur Deaktivierung eines Ein-/Ausgangs-Port des Netzwerkverteilers). Der Konfigurationsteilnehmer 105 fährt in dem Ablaufdiagramm 400 in Fig. 1 wie oben beschrieben so lange fort, bis der Konfigurationsteilnehmer 105 sämtliche im Automatisierungsnetzwerk 100 befindliche Netzwerkteilnehmer als solche erfasst und erkannt hat und der Konfigurationsteilnehmer dabei keine weiteren Netzwerkverteiler ermitteln kann.

Figur 2 zeigt einen schematischen Aufbau des Automatisierungsnetzwerks 100, dessen Netzwerkteilnehmer anhand des in Figur 1 dargestellten Verfahrens ermittelt werden. Der Konfigurationsteilnehmer 105, der beispielsweise als EtherCAT Master-Netzwerkteilnehmer ausgebildet ist, ist über eine erste Datenleitung 205 mit einem ersten Ein-/Ausgangs-Port P0 des ersten Netzwerkverteilers 120 verbunden. Der Konfigurationsteilnehmer 105 sendet über die erste Datenleitung 205 ein Abfragetelegramm an den ersten Ein-/Ausgangs-Port P0 des ersten Netzwerkverteilers 120 aus. Ferner legt der Konfigurationsteilnehmer 105 das Zeitfenster fest, in dem der Konfigurationsteilnehmer 105 das Abfragetelegramm über die erste Datenleitung 205 zurückerwartet.

Der erste Netzwerkverteiler 120 trägt in das Abfragetelegramm die Port-Information für die weiteren Ein-/Ausgangs-Ports des ersten Netzwerkverteilers 120 ein, an die jeweils weitere Datenleitungen angeschlossen sind. Beispielsweise umfasst die Port-Information (Port-Kennung und Datenübertragungsrate) einen zweiten Ein-/Ausgangs-Port P1 des ersten Netzwerkverteilers 120, an dem eine zweite Datenleitung 210 angeschlossen ist, wobei der zweite Ein-/Ausgangs-Port P1 ausgelegt ist, die zweite Datenübertragungsrate mit 1 Gbit/s für die Datenkommunikation auf der zweiten Datenleitung 210 umzusetzen, einen dritten Ein-/Ausgangs-Port P2 des ersten Netzwerkverteilers 120, an dem eine dritte Datenleitung 215 angeschlossen ist, wobei der dritte Ein-/Ausgangs-Port P2 ausgelegt ist, die zweite Datenübertragungsrate mit 1 Gbit/s für die Datenkommunikation auf der dritten Datenleitung 215 umzusetzen, einen vierten Ein-/Ausgangs-Port P3 des ersten Netzwerkverteilers 120, an dem eine vierte Datenleitung 220 angeschlossen ist, wobei der vierte Ein-/Ausgangs-Port P3 ausgelegt ist, die erste Datenübertragungsrate mit 100 Mbit/s für die Datenkommunikation auf der vierten Datenleitung 220 umzusetzen, einen fünften Ein-/Ausgangs-Port P4 des ersten Netzwerkverteilers 120, an dem eine fünfte Datenleitung 225 angeschlossen ist, wobei der fünfte Ein-/Ausgangs-Port P4 ausgelegt ist, die zweite Datenübertragungsrate mit 1 Gbit/s für die Datenkommunikation auf der fünften Datenleitung 225 umzusetzen, einen siebten Ein-/Ausgangs-Port P6 des ersten Netzwerkverteilers 120, an dem eine sechste Datenleitung 230 angeschlossen ist, wobei der siebte Ein-/Ausgangs-Port P6 ausgelegt ist, die zweite Datenübertragungsrate mit 1 Gbit/s für die Datenkommunikation auf der sechsten Datenleitung 230 umzusetzen, und einen achten Ein-/Ausgangs-Port P7 des ersten Netzwerkverteilers 120, an dem eine siebte Datenleitung 235 angeschlossen ist, wobei der achte Ein-/Ausgangs-Port P7 ausgelegt ist, die erste Datenübertragungsrate mit 100 Mbit/s für die Datenkommunikation auf der siebten Datenleitung 235 umzusetzen. Beispielsweise kann an einem sechsten Ein-/Ausgangs-Port P5 keine weitere Datenleitung angeschlossen sein und der sechste Ein-/Ausgangs-Port P5 mit dem nicht dargestellten Schalter des ersten Netzwerkverteilers 120 kurzgeschlossen sein.

Die Port-Kennung sowie die Datenübertragungsrate der einzelnen ersten bis achten Ein-/Ausgangs-Ports (P0 bis P7) des ersten Netzwerkverteilers 120 sind beliebig gewählt worden und hätten auch in einer anderen Weise vergeben werden können. Auch für nachfolgende Netzwerkverteiler im Automatisierungsnetzwerk 100 erfolgt eine exemplarische Wahl der Port-Kennung und der Datenübertragungsrate der einzelnen Ein-/Ausgangs-Ports. Es wird dann nicht erneut darauf hingewiesen, dass dies auch davon abweichend erfolgen kann.

Der erste Netzwerkverteiler 120 sendet das Abfragetelegramm mit den oben stehenden Informationen, die beispielsweise in der Speichereinheit des ersten Netzwerkverteilers 120 enthalten sind, innerhalb des festgelegten Zeitfensters über die empfangende und somit erste Datenleitung 205 an den Konfigurationsteilnehmer 105 zurück. Der Konfigurationsteilnehmer 105 ist aufgrund der in dem zurückgesandten Abfragetelegramm enthalten Port-Information in der Lage, den ersten Netzwerkverteiler 120 als Netzwerkverteiler zu erkennen. Daraufhin sendet der Konfigurationsteilnehmer 105 beispielsweise ein Konfigurationstelegramm, um den einzelnen weiteren Ein-/Ausgangs-Ports des ersten Netzwerkverteilers 120, an die weitere Datenleitungen angeschlossen sind, auf der Grundlage der Port-Information eine Routing-Information zuzuordnen, damit der erste Netzwerkverteiler 120 die weiteren Abfragetelegramme jeweils auf dem der Routing-Information zugeordneten weiteren Ein-/Ausgangs-Port des ersten Netzwerkverteilers 120 ausgibt. Die Routing-Information kann nach obiger Erläuterung oder identisch zur Port-Information ausgebildet sein.

Beispielsweise ordnet der Konfigurationsteilnehmer 105 dem zweiten Ein-/Ausgangs-Port P1 des ersten Netzwerkverteilers 120 die Routing-Information als Segment-Adresse A zu, dem dritten Ein-/Ausgangs-Port P2 des ersten Netzwerkverteilers 120 die Routing-Information als Segment-Adresse B zu, dem vierten Ein-/Ausgangs-Port P3 des ersten Netzwerkverteilers 120 die Routing-Information als Segment-Adresse C zu, dem fünften Ein-/Ausgangs-Port P4 des ersten Netzwerkverteilers 120 die Routing-Information als Segment-Adresse D zu, dem siebten Ein-/Ausgangs-Port P6 des ersten Netzwerkverteilers 120 die Routing-Information als Segment-Adresse E zu, und dem achten Ein-/Ausgangs-Port P7 des ersten Netzwerkverteilers 120 die Routing-Information als Segment-Adresse F zu. Nachfolgend wird davon ausgegangen, dass die einzelnen an die weiteren Datenleitungen angeschlossenen Netzwerkteilnehmer die weiteren Abfragetelegramme jeweils innerhalb des festgelegten Zeitfensters an den Konfigurationsteilnehmer 105 zurücksenden. Die mit den Segment-Adressen A bis F ansprechbaren Netzwerkteilnehmer sind in Figur 2 dargestellt, wobei der zweite Netzwerkverteiler 130 ein weiteres Abfragetelegramm mit der Segment-Adresse A über den ersten Ein-/Ausgangs-Port P0 des zweiten Netzwerkverteilers 130 ebenfalls empfangen kann. Die Segment-Adressen sind exemplarisch gewählt worden und können auch von der gewählten Beschreibung abweichen. Auch können die Segment-Adressen A bis F in Figur 2 Segmente im Automatisierungsnetzwerk 100 repräsentieren, die von der oben stehenden Ausgestaltung der EtherCAT Segmente abweichen können, da die eigentliche Strukturierung des Automatisierungsnetzwerks 100, das heißt die Unterteilung des Automatisierungsnetzwerks 100 in die oben erläuterten EtherCAT Segmente, beispielsweise erst nach dem vollständigen Erfassen der Netzwerkteilnehmer in dem Automatisierungsnetzwerk 100 umgesetzt werden kann. In diesem Zusammenhang können einzelnen Ein-/Ausgangs-Ports des ersten Netzwerkverteilers 120 beispielsweise neue Routing-Informationen in Form von anderen Segment-Adressen zum Ansprechen der anderweitig unterteilten EtherCAT Segmenten zugeordnet werden.

Anschließend versendet der Konfigurationsteilnehmer 105 weitere Abfragetelegramme jeweils mit der Routing-Information über die erste Datenleitung 205 an den ersten Ein-/Ausgangs-Port P0 des ersten Netzwerkverteilers 120, wobei der erste Netzwerkverteiler 120 die weiteren Abfragetelegramme parallel über die einzelnen weiteren zweiten bis achten Ein-/Ausgangs-Ports P1 bis P7 des ersten Netzwerkverteilers 120 an die weiteren Datenleitungen ausgibt. Das Abfragetelegramm mit der Routing-Information, der Segment-Adresse A, wird vom ersten Netzwerkverteiler 120 beispielsweise, aufgrund der Zuordnung der Routing Information, der Segment-Adresse A, zu dem zweiten Ein-/Ausgangs-Port P1 des ersten Netzwerkverteilers 120, über den zweiten Ein-/Ausgangs-Port P1 des ersten Netzwerkverteilers 120 auf der zweiten Datenleitung 210 ausgegeben. Das Abfragetelegramm mit der Routing-Information, der Segment-Adresse B, wird vom ersten Netzwerkverteiler 120 beispielsweise, aufgrund der Zuordnung der Routing Information, der Segment-Adresse B, zu dem dritten Ein-/Ausgangs-Port P2 des ersten Netzwerkverteilers 120, über den dritten Ein-/Ausgangs-Port P2 des ersten Netzwerkverteilers 120 auf der dritten Datenleitung 215 ausgegeben. Das Abfragetelegramm mit der Routing-Information, der Segment-Adresse C, wird vom ersten Netzwerkverteiler 120 beispielsweise, aufgrund der Zuordnung der Routing Information, der Segment-Adresse C, zu dem vierten Ein-/Ausgangs-Port P3 des ersten Netzwerkverteilers 120, über den vierten Ein-/Ausgangs-Port P3 des ersten Netzwerkverteilers 120 auf der vierten Datenleitung 220 ausgegeben. Beispielsweise kann das Abfragetelegramm mit der Routing-Information, der Segment-Adresse C mit der zweiten Datenübertragungsrate mit 1 Gbit/s an den ersten Netzwerkverteiler 120 vom Konfigurationsteilnehmer 105 gesendet worden sein und vom ersten Netzwerkverteiler 120 zunächst im FIFO des ersten Netzwerkverteilers 120 zwischengespeichert worden sein, bevor der erste Netzwerkverteiler 120 das Abfragetelegramm mit der ersten Datenübertragungsrate mit 100 Mbit/s über den vierten Ein-/Ausgangs-Port P3 des ersten Netzwerkverteilers 120 ausgibt. Dabei muss das Abfragetelegramm nicht vollständig empfangen worden sein, um vom ersten Netzwerkverteiler 120 auf dem vierten Ein-/Ausgangs-Port P3 des ersten Netzwerkverteilers 120 weiter ausgegeben zu werden.

Das Abfragetelegramm mit der Routing-Information, der Segment-Adresse D, wird vom ersten Netzwerkverteiler 120 beispielsweise, aufgrund der Zuordnung der Routing Information, der Segment-Adresse D, zu dem fünften Ein-/Ausgangs-Port P4 des ersten Netzwerkverteilers 120, über den fünften Ein-/Ausgangs-Port P4 des ersten Netzwerkverteilers 120 auf der fünften Datenleitung 225 ausgegeben. Das Abfragetelegramm mit der Routing-Information, der Segment-Adresse E, wird vom ersten Netzwerkverteiler 120 beispielsweise, aufgrund der Zuordnung der Routing Information, der Segment-Adresse E, zu dem siebten Ein-/Ausgangs-Port P6 des ersten Netzwerkverteilers 120, über den siebten Ein-/Ausgangs-Port P6 des ersten Netzwerkverteilers 120 auf der sechsten Datenleitung 230 ausgegeben. Das Abfragetelegramm mit der Routing-Information, der Segment-Adresse F, wird vom ersten Netzwerkverteiler 120 beispielsweise, aufgrund der Zuordnung der Routing Information, der Segment-Adresse F, zu dem achten Ein-/Ausgangs-Port P7 des ersten Netzwerkverteilers 120, über den achten Ein-/Ausgangs-Port P7 des ersten Netzwerkverteilers 120 auf der siebten Datenleitung 235 ausgegeben.

Der an die zweite Datenleitung 210 angeschlossene fünfte Protokoll-Netzwerkteilnehmer 155 trägt die Netzwerkteilnehmer-Information in das Abfragetelegramm ein und sendet das Abfragetelegramm an einen zweiten Netzwerkverteiler 130, der nachfolgend an die zweite Datenleitung 210 angeschlossen ist. Beispielsweise ist der fünfte Protokoll-Netzwerkteilnehmer 155 als EtherCAT-Netzwerkteilnehmer ausgebildet, der ausgelegt ist eine Datenkommunikation mit der zweiten Datenübertragungsrate mit 1 Gbit/s umzusetzen. Der zweite Netzwerkverteiler 130 trägt die Port-Information in das Abfragetelegramm ein, also dass an dem zweiten Ein-/Ausgangs-Port P1 des zweiten Netzwerkverteilers 130 und an dem dritten Ein-/Ausgangs-Port P2 des zweiten Netzwerkverteilers 130 weitere Datenleitungen angeschlossen sind, und sendet das Abfragetelegramm an den Konfigurationsteilnehmer über die empfangende zweite Datenleitung 210 und die erste Datenleitung 205 an den Konfigurationsteilnehmer 105 zurück.

Ein an dem dritten Ein-/Ausgangs-Port P2 des ersten Netzwerkverteilers 120 über die dritte Datenleitung 215 angeschlossener Master-Netzwerkteilnehmer 110 trägt seine Netzwerkteilnehmer-Information in das Abfragetelegramm ein und sendet das Abfragetelegramm über die empfangende und somit dritte Datenleitung 215 und die erste Datenleitung 205 an den Konfigurationsteilnehmer 105 zurück.

Ein an dem vierten Ein-/Ausgangs-Port P3 des ersten Netzwerkverteilers 120 über die vierte Datenleitung 220 angeschlossener erster Protokoll-Netzwerkteilnehmer 115 trägt seine Netzwerkteilnehmer-Information in das Abfragetelegramm ein und sendet das Abfragetelegramm über die vierte Datenleitung 220 und die erste Datenleitung 205 an den Konfigurationsteilnehmer 105 zurück. Beispielsweise kann der erste Protokoll-Netzwerkteilnehmer 115 als Kopplerelement EK1100 der Firma Beckhoff Automation GmbH & Co. KG ausgebildet sein und über die einzelnen Klemmen zum Anschluss von EtherCAT Protokoll-Netzwerkteilnehmern ausgebildet sein. Dabei kann der erste Protokoll-Netzwerkteilnehmer 115 für eine Datenkommunikation mit der ersten Datenübertragungsrate mit 100 Mbit/s ausgelegt sein. Der erste Protokoll-Netzwerkteilnehmer 115 sendet das Abfragetelegramm mit der ersten Datenübertragungsrate über die vierte Datenleitung 220 an den vierten Ein-/Ausgangs-Port P3 des ersten Netzwerkverteilers 120. Der erste Netzwerkverteiler 120 empfängt das Abfragetelegramm vollständig und speichert das Abfragetelegramms in seiner FIFO zwischen, bevor der erste Netzwerkverteiler 120 das Abfragetelegramm mit der zweiten Datenübertragungsrate mit 1 Gbit/s über den ersten Ein-/Ausgangs-Port P0 des ersten Netzwerkverteilers 120 und die erste Datenleitung 205 an den Konfigurationsteilnehmer 105 sendet. Hierbei ist angenommen worden, dass das Abfragetelegramm keine Längeninformation aufweist.

Ein an dem fünften Ein-/Ausgangs-Port P4 des ersten Netzwerkverteilers 120 über die fünfte Datenleitung 225 angeschlossener zweiter Protokoll-Netzwerkteilnehmer 125 trägt die Netzwerkteilnehmer-Information in das Abfragetelegramm ein und sendet das Abfragetelegramm über die fünfte Datenleitung 225 an einen nachfolgenden dritten Protokoll-Netzwerkteilnehmer 135 weiter. Der dritte Protokoll-Netzwerkteilnehmer 135 trägt die Netzwerkteilnehmer-Information in das Abfragetelegramm ein und sendet das Abfragetelegramm über die fünfte Datenleitung 225 an einen nachfolgenden vierten Protokoll-Netzwerkteilnehmer 145 weiter. Der vierte Protokoll-Netzwerkteilnehmer 145 erkennt wie oben erläutert, dass der vierte Protokoll-Netzwerkteilnehmer 145 der letzte Protokoll-Netzwerkteilnehmer in der Kette ist, und sendet das Abfragetelegramm nach dem Eintragen der Netzwerkteilnehmer-Information über die empfangende fünfte Datenleitung 225 und die erste Datenleitung 205 an den Konfigurationsteilnehmer 105 zurück. Beispielsweise ist der zweite Protokoll-Netzwerkteilnehmer 125 als ein Kopplerelement ausgebildet, der dritte Protokoll-Netzwerkteilnehmer 135 und der vierte Protokoll-Netzwerkteilnehmer 145 jeweils als sogenannte "Simple Branche", wobei die "Simple Branche" neben den 2 EtherCAT Ein-/Ausgangs-Ports zusätzlich noch eine Routing-Funktionalität umfassen, sodass die "Simple Branche" neben dem EtherCAT Datenübertragungsprotokoll auch weitere Datenübertragungsprotokolle verarbeiten, beispielsweise TCP/IP, Ethernet, etc. Beispielsweise kann der zweite Protokoll-Netzwerkteilnehmer 125 für eine Datenkommunikation mit der zweiten Datenübertragungsrate mit 1 Gbit/s ausgelegt sein, sowie der dritte Protokoll-Netzwerkteilnehmer 135 und der vierte Protokoll-Netzwerkteilnehmer 145 ebenfalls für die zweite Datenübertragungsrate ausgelegt sein können.

Beispielsweise erhält der Konfigurationsteilnehmer 105 weder über die sechste Datenleitung 230 noch über die siebte Datenleitung 235 das Abfragetelegramm innerhalb des festgelegten Zeitfensters zurück. An die sechste Datenleitung 230 ist dabei ein zweiter Netzwerkteilnehmer 195 und an die siebte Datenleitung 235 ein erster Netzwerkteilnehmer 190 angeschlossen. Diese sind jeweils als Ethernet-Netzwerkteilnehmer ausgebildet und verarbeiten demnach das den jeweiligen Abfragetelegrammen zugrundeliegende EtherCAT Datenübertragungsprotokoll nicht, und senden das Abfragetelegramm nicht an den Konfigurationsteilnehmer 105 zurück. Der Konfigurationsteilnehmer 105 kann daraufhin den siebten und achten Ein-/Ausgangs-Port P6, P7 des ersten Netzwerkverteilers 120 und die daran angeschlossene sechste und siebte Datenleitung 230, 235 von einer weiteren Datenkommunikation mithilfe eines weiteren Konfigurationstelegramms ausschließen. Zum Beispiel kann der Konfigurationsteilnehmer 105 den siebten und achten Ein-/Ausgangs-Port P6, P7 des ersten Netzwerkverteilers 120 deaktivieren, also mithilfe des Schalters des ersten Netzwerkverteilers 120 kurzschließen, sodass über den siebten und achten Ein-/Ausgangs-Port P6, P7 des ersten Netzwerkverteilers 120 keine Telegramme mehr ausgegeben, sondern an den Konfigurationsteilnehmer 105 zurückgesendet werden.

Der Konfigurationsteilnehmer 105 sendet zudem ein Konfigurationstelegramm an den zweiten Netzwerkverteiler 130, um den einzelnen weiteren zweiten und dritten Ein-/Ausgangs-Ports P1, P2 des zweiten Netzwerkverteilers 130 jeweils eine Routing-Information zuzuweisen. Beispielsweise ordnet der Konfigurationsteilnehmer 105 dem zweiten Ein-/Ausgangs-Port P1 des zweiten Netzwerkverteilers 130 die Routing-Information als Segment-Adresse G zu und dem dritten Ein-/Ausgangs-Port P2 des zweiten Netzwerkverteilers 130 die Routing-Information als Segment-Adresse H zu. Daraufhin versendet der Konfigurationsteilnehmer 105 über die erste und zweite Datenleitung 205, 210 weitere Abfragetelegramme mit der Routing-Information an den zweiten Netzwerkverteiler 130, die der zweite Netzwerkverteiler 130 über den der Routing-Information zugeordneten zweiten Ein-/Ausgangs-Port P1 des zweiten Netzwerkverteilers 130 sowie den der Routing-Information zugeordneten dritten Ein-/Ausgangs-Port P2 des zweiten Netzwerkverteilers 130 parallel ausgibt. Das Abfragetelegramm mit der Routing-Information, der Segment-Adresse G, wird über den zweiten Ein-/Ausgangs-Port P1 des zweiten Netzwerkverteilers 130 von dem zweiten Netzwerkverteiler 130 über eine achte Datenleitung 240 an einen sechsten Protokoll-Netzwerkteilnehmer 160 ausgegeben. Die mit den Segment-Adressen G bis H ansprechbaren Netzwerkteilnehmer sind in Figur 2 dargestellt, wobei der dritte Netzwerkverteiler 140 ein weiteres Abfragetelegramm mit der Segment-Adresse H über den ersten Ein-/Ausgangs-Port P0 des dritten Netzwerkverteilers 140 ebenfalls empfangen kann. Die Segment-Adressen sind exemplarisch gewählt worden und können auch von der gewählten Beschreibung abweichen. Auch können die Segment-Adressen G bis H in Figur 2 Segmente im Automatisierungsnetzwerk 100 repräsentieren, die von der oben stehenden Ausgestaltung der EtherCAT Segmente abweichen können, da die eigentliche Strukturierung des Automatisierungsnetzwerks 100, das heißt die Unterteilung des Automatisierungsnetzwerks 100 in die oben erläuterten EtherCAT Segmente, beispielsweise erst nach dem vollständigen Erfassen der Netzwerkteilnehmer in dem Automatisierungsnetzwerk 100 umgesetzt werden kann. In diesem Zusammenhang können einzelnen Ein-/Ausgangs-Ports des ersten Netzwerkverteilers 120 beispielsweise neue Routing-Informationen in Form von anderen Segment-Adressen zum Ansprechen der anderweitig unterteilten EtherCAT Segmenten zugeordnet werden.

Der sechste Protokoll-Netzwerkteilnehmer trägt die Netzwerkteilnehmer-Information in das Abfragetelegramm ein und sendet das Abfragetelegramm über die achte Datenleitung 240 an einen nachfolgenden siebten Protokoll-Netzwerkteilnehmer 165 weiter. Der siebte Protokoll-Netzwerkteilnehmer 165 erkennt wie oben erläutert, dass der siebte Protokoll-Netzwerkteilnehmer 165 der letzte Protokoll-Netzwerkteilnehmer in der an der achten Datenleitung 240 angeschlossenen Kette an Protokoll-Netzwerkteilnehmern ist und sendet das Abfragetelegramm über die achte Datenleitung 240, die zweite Datenleitung 210 und die erste Datenleitung 205 an den Konfigurationsteilnehmer 105 zurück. Zum Beispiel sind der sechste Protokoll-Netzwerkteilnehmer 160 als "Simple Branch", wie oben erläutert, und der siebte Protokoll-Netzwerkteilnehmer 165 als Koppelerelement ausgebildet. Der sechste Protokoll-Netzwerkteilnehmer 160 sowie der siebte Protokoll-Netzwerkteilnehmer 165 können zum Beispiel für eine Datenkommunikation mit der zweiten Datenübertragungsrate mit 1 Gbit/s ausgebildet sein.

Ein achter Protokoll-Netzwerkteilnehmer 170, der an eine neunte Datenleitung 245 an dem dritten Ein-/Ausgangs-Port P2 des zweiten Netzwerkverteilers 130 angeschlossen ist, empfängt das Abfragetelegramm und trägt die Netzwerkteilnehmer-Information in das Abfragetelegramm ein, bevor der achte Protokoll-Netzwerkteilnehmer 170 das Abfragetelegramm an einen dritten Netzwerkverteiler 140, der nachfolgend an der neunten Datenleitung 245 angeschlossen ist, sendet. Der dritte Netzwerkverteiler 140 empfängt das Abfragetelegramm auf dem ersten Ein-/Ausgangs-Port P0 des dritten Netzwerkverteilers 140 und trägt die Port-Information der einzelnen weiteren Ein-/Ausgangs-Ports des dritten Netzwerkverteilers 140, an denen weitere Datenleitungen angeschlossen sind, ein. Dabei umfasst die Port-Information (Port-Kennung sowie Datenübertragungsrate der einzelnen Ein-/Ausgangs-Ports) einen zweiten Ein-/Ausgangs-Port P1 des dritten Netzwerkverteilers 140, wobei der zweite Ein-/Ausgangs-Port P1 des dritten Netzwerkverteilers 140 ausgebildet ist, eine Datenkommunikation mit der zweiten Datenübertragungsrate mit 1 Gbit/s umzusetzen, einen dritten Ein-/Ausgangs-Port P2 des dritten Netzwerkverteilers 140, wobei der dritte Ein-/Ausgangs-Port P2 des dritten Netzwerkverteilers 140 ausgebildet ist, eine Datenkommunikation mit der zweiten Datenübertragungsrate mit 1 Gbit/s umzusetzen, und einen vierten Ein-/Ausgangs-Port P4 des dritten Netzwerkverteilers 140, wobei der vierte Ein-/Ausgangs-Port P4 des dritten Netzwerkverteilers 140 ausgebildet ist, eine Datenkommunikation mit der ersten Datenübertragungsrate mit 100 Mbit/s umzusetzen.

Anschließend sendet der dritte Netzwerkverteiler 140 das Abfragetelegramm über die neunte Datenleitung 245, die zweite Datenleitung 210 und die erste Datenleitung 205 an den Konfigurationsteilnehmer 105 zurück.

Beispielsweise sind der achte Protokoll-Netzwerkteilnehmer 170 als EtherCAT-Netzwerkteilnehmer, der ausgelegt ist die zweite Datenübertragungsrate mit 1 Gbit/s für die Datenkommunikation umzusetzen, und der erste bis dritte Netzwerkverteiler 120, 130, 140 als Branche ausgebildet.

Zur Zuordnung der einzelnen weiteren zweiten bis vierten Ein-/Ausgangs-Ports P1 bis P3 des dritten Netzwerkverteilers 140 mit der jeweiligen Routing-Information, nutzt der Konfigurationsteilnehmer 105 ein Konfigurationstelegramm, analog zur obigen Beschreibung und erstellt die Routing-Informationen auf der Grundlage der Port-Information des dritten Netzwerkverteilers 140. Zum Beispiel ordnet der Konfigurationsteilnehmer 105 dem zweiten Ein-/Ausgangs-Port P1 des dritten Netzwerkverteilers 140 die Routing-Information als Segment-Adresse K zu, dem dritten Ein-/Ausgangs-Port P2 des dritten Netzwerkverteilers 140 die Routing-Information als Segment-Adresse L zu und dem vierten Ein-/Ausgangs-Port P3 des dritten Netzwerkverteilers 140 die Routing-Information als Segment-Adresse M zu. Die weiteren Abfragetelegramme, die der Konfigurationsteilnehmer 105 an den dritten Netzwerkverteiler 140 versendet und vom dritten Netzwerkverteiler 140 über den der Routing-Information zugeordneten Ein-/Ausgangs-Port ausgegeben werden, weisen jeweils die Routing Information mit den Segment-Adressen K, L und M auf und werden parallel über die zugeordneten Ein-/Ausgangs-Ports des dritten Netzwerkverteilers 140 ausgegeben. Beispielsweise wird das Abfragetelegramm mit der Routing-Information, der Segment-Adresse M mit der gleichen Datenübertragungsrate vom dritten Netzwerkverteiler 140 empfangen und weiter ausgegeben, wie oben im Zusammenhang mit dem ersten Netzwerkverteiler 120 und dem Abfragetelegramm mit der Routing-Information, der Segment-Adresse C beschrieben ist.

Die mit den Segment-Adressen K bis M ansprechbaren Netzwerkteilnehmer sind in Figur 2 dargestellt. Die Segment-Adressen sind exemplarisch gewählt worden und können auch von der gewählten Beschreibung abweichen. Auch können die Segment-Adressen K bis M in Figur 2 Segmente im Automatisierungsnetzwerk 100 repräsentieren, die von der oben stehenden Ausgestaltung der EtherCAT Segmente abweichen können, da die eigentliche Strukturierung des Automatisierungsnetzwerks 100, das heißt die Unterteilung des Automatisierungsnetzwerks 100 in die oben erläuterten EtherCAT Segmente, beispielsweise erst nach dem vollständigen Erfassen der Netzwerkteilnehmer in dem Automatisierungsnetzwerk 100 umgesetzt werden kann. In diesem Zusammenhang können einzelnen Ein-/Ausgangs-Ports des ersten Netzwerkverteilers 120 beispielsweise neue Routing-Informationen in Form von anderen Segment-Adressen zum Ansprechen der anderweitig unterteilten EtherCAT Segmenten zugeordnet werden.

Das Abfragetelegramm mit der Routing-Information, der Segment-Adresse K wird vom dritten Netzwerkverteiler 140 auf dem der Routing-Information zugeordneten zweiten Ein-/Ausgangs-Port P1 des dritten Netzwerkverteilers 140 über eine zehnte Datenleitung 250 ausgegeben. Ein an die zehnte Datenleitung 250 angeschlossener neunter Protokoll-Netzwerkteilnehmer 175 trägt die Netzwerkteilnehmer-Information in das Abfragetelegramm ein und sendet das Abfragetelegramm an einen zehnten Protokoll-Netzwerkteilnehmer 180, der nachfolgend an die zehnte Datenleitung 250 angeschlossen ist. Der zehnte Protokoll-Netzwerkteilnehmer 180 trägt ebenfalls die Netzwerkteilnehmer-Information in das Abfragetelegramm ein und erkennt, dass er der letzte Protokoll-Netzwerkteilnehmer in der Kette ist, und sendet das Abfragetelegramm über die zehnte Datenleitung 250, die neunte Datenleitung 245, die zweite Datenleitung 210 und die erste Datenleitung 205 an den Konfigurationsteilnehmer 105 zurück. Beispielsweise sind der neunte Protokoll-Netzwerkteilnehmer 175 als Kopplerelement und der zehnte Protokoll-Netzwerkteilnehmer 180 als "Simple Branch", wie oben beschrieben, ausgebildet.

Ein an einer elften Datenleitung 255 über den dritten Ein-/Ausgangs-Port P2 an den dritten Netzwerkverteiler 140 angeschlossener dritter Netzwerkteilnehmer 200 kann beispielsweise als Ethernet Switch ausgebildet sein und das EtherCAT Datenübertragungsprotokoll, das dem Abfragetelegramm mit der Routing-Information, der Segment-Adresse L zugrunde liegt, nicht verarbeiten. Wenn der als Ethernet Switch ausgebildete dritte Netzwerkteilnehmer 200 das EtherCAT Datenübertragungsprotokoll nicht verarbeitet, so sendet der Ethernet Switch das Abfragetelegramm nicht an den Konfigurationsteilnehmer 105 zurück. Wenn der Konfigurationsteilnehmer 105 also das Abfragetelegramm von dem Ethernet Switch, dem dritten Netzwerkteilnehmer 200, nicht in dem festgelegten Zeitfenster zurück erhält, so kann der Konfigurationsteilnehmer 105 zum Beispiel mit einem Konfigurationstelegramm an den dritten Netzwerkverteiler 140 einstellen, dass über den dritten Ein-/Ausgangs-Port P2 des dritten Netzwerkverteilers 140 und der daran angeschlossenen elften Datenleitung 255 kein weiteres Telegramm mehr gesendet wird.

Ein an einer zwölften Datenleitung 260 über den vierten Ein-/Ausgangs-Port P3 an den dritten Netzwerkverteiler 140 angeschlossener elfter Protokoll-Netzwerkteilnehmer 185 kann das Abfragetelegramm mit der Routing-Information, der Segment-Adresse M über die zwölfte Datenleitung 260 empfangen und die Netzwerkteilnehmer-Information in das Abfragetelegramm eintragen, anhand derer der Konfigurationsteilnehmer 105 den elften Protokoll-Netzwerkteilnehmer 185 erkennt. Beispielsweise ist der elfte Protokoll-Netzwerkteilnehmer 185 als EtherCAT-Protokoll-Netzwerkteilnehmer ausgebildet, der ausgelegt ist die Datenkommunikation mit der ersten Datenübertragungsrate mit 100 Mbit/s umzusetzen. Der elfte Protokoll-Netzwerkteilnehmer 185 erkennt, dass nachfolgend kein weiterer Netzwerkteilnehmer an der zwölften Datenleitung 260 angeschlossen ist und sendet das Abfragetelegramm über die zwölfte Datenleitung 260, die neunte Datenleitung 245, die zweite Datenleitung 210 und die erste Datenleitung 205 an den Konfigurationsteilnehmer 105 zurück. Beispielsweise wird das Abfragetelegramm von dem elften Protokoll-Netzwerkteilnehmer 185 vom dritten Netzwerkverteiler 140 mit der gleichen Datenübertragungsrate empfangen und weiter ausgegeben, wie oben im Zusammenhang mit dem ersten Netzwerkverteiler 120 und dem Abfragetelegramm von dem ersten Protokoll-Netzwerkteilnehmer 115 beschrieben wurde.

Der Konfigurationsteilnehmer 105 hat die Netzwerkteilnehmer des Automatisierungsnetzwerks 100 damit vollständig erfasst und kann eine Konfiguration der Netzwerkteilnehmer vornehmen, beispielsweise die Datenübertragungsrate in einer Kette an einen weiteren Ein-/Ausgangs-Port des jeweiligen Netzwerkverteilers angeschlossenen Protokoll-Netzwerkteilnehmern auf die erste Datenübertragungsrate setzen, wenn in der Kette bzw. in dem Segment Protokoll-Netzwerkteilnehmer angeordnet sind, die sowohl die erste und die zweite Datenübertragungsrate umsetzen können und ein weiterer Protokoll-Netzwerkteilnehmer nur zum Umsetzen der ersten Datenübertragungsrate ausgelegt ist. Beispielsweise kann der Konfigurationsteilnehmer 105 die Datenübertragungsrate für die Kette an Protokoll-Netzwerkteilnehmern einheitlich auf die erste Datenübertragungsrate setzen. Zudem vorteilhaft ist, dass der Konfigurationsteilnehmer 105 eine zentrale Konfiguration der erfassten Protokoll-Netzwerkteilnehmer und Netzwerkverteiler im Automatisierungsnetzwerk 100 vornehmen kann.

Die einzelnen Ein-/Ausgangs-Ports der Netzwerkverteiler, auf denen die Netzwerkverteiler jeweils das Abfragetelegramm von dem Konfigurationsteilnehmer 105 empfangen haben, können vom jeweiligen Netzwerkverteiler in der Speichereinheit der Netzwerkverteiler hinterlegt werden, um beim Zurücksenden der Abfragetelegramme von den jeweiligen Netzwerkverteilern den dem Konfigurationsteilnehmer 105 zugeordneten ersten Ein-/Ausgangs-Port P0 des entsprechenden Netzwerkverteilers als den Ausgangs-Port zu nutzen. Ferner ist denkbar, dass der erste bis dritte Netzwerkverteiler 120, 130, 140 die über die einzelnen weiteren Ein-/Ausgangs-Ports von den Protokoll-Netzwerkteilnehmern zurückgesendeten Abfragetelegramme fragmentiert, um eine Kollision der zu dem Konfigurationsteilnehmer 105 zurückgesandten Abfragetelegramme zu vermeiden.

Für die Strukturierung des Automatisierungsnetzwerks 100, auf der Grundlage der mit dem vorgeschlagenen Verfahren erfassten Netzwerkteilnehmer, in EtherCAT Segmente sind verschiedene Ausgestaltungen denkbar. Beispielsweise kann ein EtherCAT Segment an einem weiteren Ein-/Ausgangs-Port eines Netzwerkverteilers beginnen, über den nur Protokoll-Netzwerkteilnehmer angeschlossen sind. Beispielsweise kann sich ein solches EtherCAT Segment über den zweiten Protokoll-Netzwerkteilnehmer 125, den dritten Protokoll-Netzwerkteilnehmer 135 und den vierten Protokoll-Netzwerkteilnehmer 145 erstrecken und den Bereich der Protokoll-Netzwerkteilnehmer umfassen, der mit der der Segment-Adresse D ansprechbar ist. Ebenso kann sich ein solches EtherCAT Segment über den ersten Protokoll-Netzwerkteilnehmer 115 erstrecken, der mit der Segment-Adresse C ansprechbar ist. Ein weiteres Beispiel für ein derartig ausgebildetes EtherCAT Segment bildet der elfte Protokoll-Netzwerkteilnehmer 185, der mit der Segment-Adresse M ansprechbar ist.

Weiterhin kann ein EtherCAT Segment an einem weiteren Ein-/Ausgangs-Port eines Netzwerkverteilers beginnen, über den Protokoll-Netzwerkteilnehmer sowie Netzwerkverteiler angeschlossen sind, wobei bei den Netzwerkverteilern dann ein weiterer Ein-/Ausgangs-Port dafür eingestellt sein muss. Beispielsweise kann ein derart ausgestaltetes EtherCAT Segment den fünften Protokoll-Netzwerkteilnehmer 155, den zweiten Netzwerkverteiler 130 (sofern der zweite Ein-/Ausgangs-Port P1 des zweiten Netzwerkverteilers 130 entsprechend eingestellt ist), den sechsten Protokoll-Netzwerkteilnehmer 160 und den siebten Protokoll-Netzwerkteilnehmer 165 umfassen. Gemäß einem weiteren Beispiel kann das EtherCAT Segment den achten Protokoll-Netzwerkteilnehmer 170, den dritten Netzwerkverteiler 140, den neunten Protokoll-Netzwerkteilnehmer 175 sowie den zehnten Protokoll-Netzwerkteilnehmer 180 umfassen.

Überdies kann ein EtherCAT Segment bei dem Konfigurationsteilnehmer 105 beginnen und bei dem nächsten Netzwerkverteiler enden. Beispielsweise kann das EtherCAT Segment also den Konfigurationsteilnehmer 105 umfassen sowie den ersten Netzwerkverteiler 120.

Zur Vereinfachung der Beschreibung der oben stehenden Ausgestaltungen der EtherCAT Segmente ist hierbei auf die Erläuterung der dazu gehörigen Datenleitungen verzichtet worden. Auch ist in Figur 2 aus Übersichtlichkeitsgründen auf die Darstellung der oben erläuterten Ausgestaltungen der EtherCAT Segmente verzichtet worden.

Die Erfindung wurde im Detail durch bevorzugte Ausführungsbeispiele beschrieben. Anstelle der beschriebenen Ausführungsbeispiele sind weitere Ausführungsbeispiele denkbar, welche weitere Abwandlungen oder Kombinationen von beschriebenen Merkmalen aufweisen können. Die Erfindung ist aus diesem Grund nicht durch die offenbarten Beispiele eingeschränkt, da vom Fachmann andere Variationen daraus abgeleitet werden können, ohne dabei den Schutzumfang der Erfindung zu verlassen.

## Patentansprüche

1. Verfahren zum Erfassen von Netzwerkteilnehmern in einem Automatisierungsnetzwerk (100) mittels von einem Konfigurationsteilnehmer (105) versendeter Abfragetelegramme, wobei die Netzwerkteilnehmer im Automatisierungsnetzwerk (100) über Datenleitungen (205, 210, 215, 220, 225, 230, 235, 240, 245, 250, 255, 260) verbunden sind und die Netzwerkteilnehmer zumindest einen Protokoll-Netzwerkteilnehmer (115, 125, 135, 145, 155, 160, 165, 170, 175, 180, 185) umfassen, der ausgelegt ist, ein bestimmtes Datenübertragungsprotokoll zu verarbeiten, und die Netzwerkteilnehmer zumindest einen Netzwerkverteiler (120, 130, 140) umfassen, der Ein-/Ausgangs-Ports (P0, P1, P2, P3, P4, P5, P6, P7) aufweist,
wobei, wenn ein Protokoll-Netzwerkteilnehmer (115, 125, 135, 145, 155, 160, 165, 170, 175, 180, 185) ein Abfragetelegramm über eine Datenleitung (205, 210, 215, 220, 225, 230, 235, 240, 245, 250, 255, 260) empfängt, der Protokoll-Netzwerkteilnehmer (115, 125, 135, 145, 155, 160, 165, 170, 175, 180, 185) eine Netzwerkteilnehmer-Information in das Abfragetelegramm einträgt und das Abfragetelegramm an einen nachfolgenden Netzwerkteilnehmer über eine weitere als die empfangende Datenleitung (205, 210, 215, 220, 225, 230, 235, 240, 245, 250, 255, 260) versendet oder, wenn kein nachfolgender Netzwerkteilnehmer an einer weiteren Datenleitung (205, 210, 215, 220, 225, 230, 235, 240, 245, 250, 255, 260) angeschlossen ist, der Protokoll-Netzwerkteilnehmer (115, 125, 135, 145, 155, 160, 165, 170, 175, 180, 185) das Abfragetelegramm über die empfangende Datenleitung (205, 210, 215, 220, 225, 230, 235, 240, 245, 250, 255, 260) an den Konfigurationsteilnehmer (105) zurücksendet,
wobei, wenn ein Netzwerkverteiler (120, 130, 140) das Abfragetelegramm über die Datenleitung (205, 210, 215, 220, 225, 230, 235, 240, 245, 250, 255, 260) auf einem ersten Ein-/Ausgangs-Port (P0) empfängt, der Netzwerkverteiler (120, 130, 140) eine Port-Information über weitere Ein-/Ausgangs-Ports (P1, P2, P3, P4, P6, P7) des Netzwerkverteilers (120, 130, 140), an die weitere Datenleitungen (210, 215, 220, 225, 230, 235, 240, 245, 250, 255, 260) angeschlossen sind, in das Abfragetelegramm einträgt und das Abfragetelegramm über die empfangende Datenleitung (205, 210, 215, 220, 225, 230, 235, 240, 245, 250, 255, 260) an den Konfigurationsteilnehmer (105) zurücksendet, und
wobei, wenn der Konfigurationsteilnehmer (105) das Abfragetelegramm von dem Netzwerkverteiler (120, 130, 140) über die Datenleitung (205, 210, 215, 220, 225, 230, 235, 240, 245, 250, 255, 260) empfängt, der Konfigurationsteilnehmer (105) auf der Grundlage der Port-Information weitere Abfragetelegramme mit jeweils einer Routing-Information erzeugt und an den Netzwerkverteiler (120, 130, 140) über die Datenleitung (205, 210, 215, 220, 225, 230, 235, 240, 245, 250, 255, 260) versendet, und der Netzwerkverteiler (120, 130, 140) die weiteren Abfragetelegramme jeweils auf dem der jeweiligen Routing-Information zugeordneten weiteren Ein-/Ausgangs-Port (P1, P2, P3, P4, P6, P7) ausgibt, um Netzwerkteilnehmer zu erfassen, die an den jeweiligen weiteren Ein-/Ausgangs-Ports (P1, P2, P3, P4, P6, P7) des Netzwerkverteilers (120, 130, 140) über die weiteren Datenleitungen (210, 215, 220, 225, 230, 235, 240, 245, 250, 255, 260) angeschlossen sind.

2. Verfahren nach Anspruch 1,
wobei die Routing-Informationen im Netzwerkverteiler (120, 130, 140) voreingestellt sind, wobei die Port-Information die Routing-Informationen umfasst und der Netzwerkverteiler (120, 130, 140) die Port-Information in das Abfragetelegramm einträgt und das Abfragetelegramm über die empfangende Datenleitung (205, 210, 215, 220, 225, 230, 235, 240, 245, 250, 255, 260) an den Konfigurationsteilnehmer (105) zurücksendet.

3. Verfahren nach Anspruch 1,
wobei der Konfigurationsteilnehmer (105), nach dem Empfangen des Abfragetelegramms mit der Port-Information von dem Netzwerkverteiler (120, 130, 140) und vor dem Versenden der weiteren Abfragetelegramme, ein Konfigurationstelegramm über die Datenleitung (205, 210, 215, 220, 225, 230, 235, 240, 245, 250, 255, 260) an den Netzwerkverteiler (120, 130, 140) versendet, um den weiteren Ein-/Ausgangs-Ports (P1, P2, P3, P4, P6, P7) des Netzwerkverteilers (120, 130, 140) jeweils die Routing-Information auf der Grundlage der Port-Information zuzuordnen.

4. Verfahren nach einem der Ansprüche 1 bis 3,
wobei der Konfigurationsteilnehmer (105) ein Zeitfenster festlegt, in dem der Konfigurationsteilnehmer (105) jeweils ein versandtes Abfragetelegramm zurückerwartet, wobei, wenn der Konfigurationsteilnehmer (105) kein Abfragetelegramm innerhalb des festgelegten Zeitfensters erhält, der Konfigurationsteilnehmer (105) die Datenleitung (205, 210, 215, 220, 225, 230, 235, 240, 245, 250, 255, 260), auf die das Abfragetelegramm ausgegeben wurde, von einer weiteren Datenkommunikation ausschließt.

5. Verfahren nach einem der Ansprüche 1 bis 4,
wobei die Netzwerkteilnehmer-Information eine Netzwerkteilnehmer-Kennung und eine Datenübertragungsrate des Protokoll-Netzwerkteilnehmers (115, 125, 135, 145, 155, 160, 165, 170, 175, 180, 185) umfasst.

6. Verfahren nach einem der Ansprüche 1 bis 5,
wobei die Port-Information eine Port-Kennung und eine Datenübertragungsrate des jeweiligen weiteren Ein-/Ausgangs-Ports (P1, P2, P3, P4, P6, P7) des Netzwerkverteilers (120, 130, 140) umfasst.

7. Verfahren nach einem der Ansprüche 1 bis 6,
wobei die Abfragetelegramme und ein Konfigurationstelegramm als Telegramme mit zugrundeliegendem EtherCAT Datenübertragungsprotokoll ausgebildet sind.

8. Automatisierungsnetzwerk (100) mit Netzwerkteilnehmern, die über Datenleitungen (205, 210, 215, 220, 225, 230, 235, 240, 245, 250, 255, 260) verbunden sind, wobei die Netzwerkteilnehmer im Automatisierungsnetzwerk (100) zumindest einen Protokoll-Netzwerkteilnehmer (115, 125, 135, 145, 155, 160, 165, 170, 175, 180, 185) umfassen, der ausgelegt ist, ein bestimmtes Datenübertragungsprotokoll zu verarbeiten, und die Netzwerkteilnehmer zumindest einen Netzwerkverteiler (120, 130, 140) umfassen, der Ein-/Ausgangs-Ports (P0, P1, P2, P3, P4, P5, P6, P7) aufweist,
wobei ein Konfigurationsteilnehmer (105) ausgelegt ist, ein Abfragetelegramm über eine Datenleitung (205, 210, 215, 220, 225, 230, 235, 240, 245, 250, 255, 260) zu versenden, wobei ein Protokoll-Netzwerkteilnehmer (115, 125, 135, 145, 155, 160, 165, 170, 175, 180, 185) ausgelegt ist, wenn der Protokoll-Netzwerkteilnehmer (115, 125, 135, 145, 155, 160, 165, 170, 175, 180, 185) das Abfragetelegramm über eine Datenleitung (205, 210, 215, 220, 225, 230, 235, 240, 245, 250, 255, 260) empfängt, eine Netzwerkteilnehmer-Information in das Abfragetelegramm einzutragen und das Abfragetelegramm an einen nachfolgenden Netzwerkteilnehmer über eine weitere als die empfangende Datenleitung (205, 210, 215, 220, 225, 230, 235, 240, 245, 250, 255, 260) zu versenden oder, wenn kein nachfolgender Netzwerkteilnehmer an einer weiteren Datenleitung (205, 210, 215, 220, 225, 230, 235, 240, 245, 250, 255, 260) angeschlossen ist, der Protokoll-Netzwerkteilnehmer (115, 125, 135, 145, 155, 160, 165, 170, 175, 180, 185) ausgebildet ist, das Abfragetelegramm über die empfangende Datenleitung (205, 210, 215, 220, 225, 230, 235, 240, 245, 250, 255, 260) an den Konfigurationsteilnehmer (105) zurückzusenden, wobei ein Netzwerkverteiler (120, 130, 140) ausgelegt ist, wenn der Netzwerkverteiler (120, 130, 140) das Abfragetelegramm über die Datenleitung (205, 210, 215, 220, 225, 230, 235, 240, 245, 250, 255, 260) auf einem ersten Ein-/Ausgangs-Port (P0) empfängt, eine Port-Information über weitere Ein-/Ausgangs-Ports (P1, P2, P3, P4, P6, P7) des Netzwerkverteilers (120, 130, 140), an die weitere Datenleitungen (210, 215, 220, 225, 230, 235, 240, 245, 250, 255, 260) angeschlossen sind, in das Abfragetelegramm einzutragen und das Abfragetelegramm über die empfangende Datenleitung (205, 210, 215, 220, 225, 230, 235, 240, 245, 250, 255, 260) an den Konfigurationsteilnehmer (105) zurückzusenden, und
wobei der Konfigurationsteilnehmer (105) ausgebildet ist, wenn der Konfigurationsteilnehmer (105) das Abfragetelegramm von dem Netzwerkverteiler (120, 130, 140) über die Datenleitung (205, 210, 215, 220, 225, 230, 235, 240, 245, 250, 255, 260) empfängt, auf der Grundlage der Port-Information weitere Abfragetelegramme mit jeweils einer Routing-Information zu erzeugen und an den Netzwerkverteiler (120, 130, 140) über die Datenleitung (205, 210, 215, 220, 225, 230, 235, 240, 245, 250, 255, 260) zu versenden, und der Netzwerkverteiler (120, 130, 140) ausgebildet ist, die weiteren Abfragetelegramme jeweils auf dem der jeweiligen Routing-Information zugeordneten weiteren Ein-/Ausgangs-Port (P1, P2, P3, P4, P6, P7) auszugeben, um Netzwerkteilnehmer zu erfassen, die an den jeweiligen weiteren Ein-/Ausgangs-Ports (P1, P2, P3, P4, P6, P7) des Netzwerkverteilers (120, 130, 140) über die weiteren Datenleitungen (210, 215, 220, 225, 230, 235, 240, 245, 250, 255, 260) angeschlossen sind.

9. Automatisierungsnetzwerk nach Anspruch 8,
wobei die Routing-Informationen im Netzwerkverteiler (120, 130, 140) voreingestellt sind, wobei die Port-Information die Routing-Informationen umfasst und der Netzwerkverteiler (120, 130, 140) ausgebildet ist, die Port-Information in das Abfragetelegramm einzutragen und das Abfragetelegramm über die empfangende Datenleitung (205, 210, 215, 220, 225, 230, 235, 240, 245, 250, 255, 260) an den Konfigurationsteilnehmer (105) zurückzusenden.

10. Automatisierungsnetzwerk nach Anspruch 8,
wobei der Konfigurationsteilnehmer (105) ausgelegt ist, nach dem Empfangen des Abfragetelegramms mit der Port-Information von dem Netzwerkverteiler (120, 130, 140) und vor dem Versenden der weiteren Abfragetelegramme, ein Konfigurationstelegramm über die Datenleitung (205, 210, 215, 220, 225, 230, 235, 240, 245, 250, 255, 260) an den Netzwerkverteiler (120, 130, 140) zu versenden, um den weiteren Ein-/Ausgangs-Ports (P1, P2, P3, P4, P6, P7) des Netzwerkverteilers (120, 130, 140) jeweils die Routing-Information auf der Grundlage der Port-Information zuzuordnen.

11. Automatisierungsnetzwerk nach einem der Ansprüche 8 bis 10,
wobei der Konfigurationsteilnehmer (105) ausgebildet ist, ein Zeitfenster festzulegen, in dem der Konfigurationsteilnehmer (105) jeweils ein versandtes Abfragetelegramm zurückerwartet,
wobei der Konfigurationsteilnehmer (105) ausgelegt ist, wenn der Konfigurationsteilnehmer (105) kein Abfragetelegramm innerhalb des festgelegten Zeitfensters erhält, die Datenleitung (205, 210, 215, 220, 225, 230, 235, 240, 245, 250, 255, 260), auf die das Abfragetelegramm ausgegeben wurde, von einer weiteren Datenkommunikation auszuschließen.

12. Automatisierungsnetzwerk nach einem der Ansprüche 8 bis 11,
wobei die Netzwerkteilnehmer-Information eine Netzwerkteilnehmer-Kennung und eine Datenübertragungsrate des Protokoll-Netzwerkteilnehmers (115, 125, 135, 145, 155, 160, 165, 170, 175, 180, 185) umfasst.

13. Automatisierungsnetzwerk nach einem der Ansprüche 8 bis 12,
wobei die Port-Information eine Port-Kennung und eine Datenübertragungsrate des jeweiligen weiteren Ein-/Ausgangs-Ports (P1, P2, P3, P4, P6, P7) des Netzwerkverteilers (120, 130, 140) umfasst.

14. Automatisierungsnetzwerk nach einem der Ansprüche 8 bis 13,
wobei die Abfragetelegramme und ein Konfigurationstelegramm als Telegramme mit zugrundeliegendem EtherCAT Datenübertragungsprotokoll ausgebildet sind.

## Claims

1. Method for detecting network subscribers in an automation network (100) by means of query telegrams sent by a configuration subscriber (105), wherein the network subscribers in the automation network (100) are connected via data lines (205, 210, 215, 220, 225, 230, 235, 240, 245, 250, 255, 260), and the network subscribers comprise at least one protocol network subscriber (115, 125, 135, 145, 155, 160, 165, 170, 175, 180, 185) which is designed to process a particular data transmission protocol, and the network subscribers comprise at least one network distributor (120, 130, 140), which has input/output ports (P0, P1, P2, P3, P4, P5, P6, P7),
wherein, when a protocol network subscriber (115, 125, 135, 145, 155, 160, 165, 170, 175, 180, 185) receives a query telegram via a data line (205, 210, 215, 220, 225, 230, 235, 240, 245, 250, 255, 260), the protocol network subscriber (115, 125, 135, 145, 155, 160, 165, 170, 175, 180, 185) enters an item of network subscriber information in the query telegram and sends the query telegram to a subsequent network subscriber via a further data line (205, 210, 215, 220, 225, 230, 235, 240, 245, 250, 255, 260) other than the receiving data line, or, if there is no subsequent network subscriber connected to a further data line (205, 210, 215, 220, 225, 230, 235, 240, 245, 250, 255, 260), the protocol network subscriber (115, 125, 135, 145, 155, 160, 165, 170, 175, 180, 185) sends the query telegram back to the configuration subscriber (105) via the receiving data line (205, 210, 215, 220, 225, 230, 235, 240, 245, 250, 255, 260),
wherein, if a network distributor (120, 130, 140) receives the query telegram at a first input/output port (P0) via the data line (205, 210, 215, 220, 225, 230, 235, 240, 245, 250, 255, 260), the network distributor (120, 130, 140) enters an item of port information about further input/output ports (P1, P2, P3, P4, P6, P7) of the network distributor (120, 130, 140), to which ports further data lines (210, 215, 220, 225, 230, 235, 240, 245, 250, 255, 260) are connected, in the query telegram and sends the query telegram back to the configuration subscriber (105) via the receiving data line (205, 210, 215, 220, 225, 230, 235, 240, 245, 250, 255, 260), and
wherein, when the configuration subscriber (105) receives the query telegram from the network distributor (120, 130, 140) via the data line (205, 210, 215, 220, 225, 230, 235, 240, 245, 250, 255, 260), the configuration subscriber (105) generates, on the basis of the item of port information, further query telegrams each containing an item of routing information and sends said further query telegrams to the network distributor (120, 130, 140) via the data line (205, 210, 215, 220, 225, 230, 235, 240, 245, 250, 255, 260), and the network distributor (120, 130, 140) outputs the further query telegrams at the respective further input/output port (P1, P2, P3, P4, P6, P7) associated with the respective item of routing information in order to detect network subscribers that are connected to the respective further input/output ports (P1, P2, P3, P4, P6, P7) of the network distributor (120, 130, 140) via the further data lines (210, 215, 220, 225, 230, 235, 240, 245, 250, 255, 260).

2. Method according to Claim 1,
wherein the items of routing information are preset in the network distributor (120, 130, 140), wherein the item of port information comprises the items of routing information and the network distributor (120, 130, 140) enters the item of port information in the query telegram and sends the query telegram back to the configuration subscriber (105) via the receiving data line (205, 210, 215, 220, 225, 230, 235, 240, 245, 250, 255, 260).

3. Method according to Claim 1,
wherein, after receiving the query telegram containing the item of port information from the network distributor (120, 130, 140) and before sending the further query telegrams, the configuration subscriber (105) sends a configuration telegram to the network distributor (120, 130, 140) via the data line (205, 210, 215, 220, 225, 230, 235, 240, 245, 250, 255, 260) in order to associate the respective item of routing information with the further input/output ports (P1, P2, P3, P4, P6, P7) of the network distributor (120, 130, 140) on the basis of the item of port information.

4. Method according to one of Claims 1 to 3,
wherein the configuration subscriber (105) defines a time window in which the configuration subscriber (105) expects back a respective query telegram that has been sent,
wherein, if the configuration subscriber (105) does not receive a query telegram within the defined time window, the configuration subscriber (105) excludes the data line (205, 210, 215, 220, 225, 230, 235, 240, 245, 250, 255, 260) on which the query telegram was output from further data communication.

5. Method according to one of Claims 1 to 4,
wherein the item of network subscriber information comprises a network subscriber identifier and a data transmission rate of the protocol network subscriber (115, 125, 135, 145, 155, 160, 165, 170, 175, 180, 185) .

6. Method according to one of Claims 1 to 5,
wherein the item of port information comprises a port identifier and a data transmission rate of the respective further input/output port (P1, P2, P3, P4, P6, P7) of the network distributor (120, 130, 140) .

7. Method according to one of Claims 1 to 6,
wherein the query telegrams and a configuration telegram are in the form of telegrams based on the EtherCAT data transmission protocol.

8. Automation network (100) having network subscribers, which are connected via data lines (205, 210, 215, 220, 225, 230, 235, 240, 245, 250, 255, 260), wherein the network subscribers in the automation network (100) comprise at least one protocol network subscriber (115, 125, 135, 145, 155, 160, 165, 170, 175, 180, 185) which is designed to process a particular data transmission protocol, and the network subscribers comprise at least one network distributor (120, 130, 140), which has input/output ports (P0, P1, P2, P3, P4, P5, P6, P7), wherein a configuration subscriber (105) is designed to send a query telegram via a data line (205, 210, 215, 220, 225, 230, 235, 240, 245, 250, 255, 260), wherein a protocol network subscriber (115, 125, 135, 145, 155, 160, 165, 170, 175, 180, 185) is designed so as, when the protocol network subscriber (115, 125, 135, 145, 155, 160, 165, 170, 175, 180, 185) receives the query telegram via a data line (205, 210, 215, 220, 225, 230, 235, 240, 245, 250, 255, 260), to enter an item of network subscriber information in the query telegram and to send the query telegram to a subsequent network subscriber via a further data line (205, 210, 215, 220, 225, 230, 235, 240, 245, 250, 255, 260) other than the receiving data line, or, if there is no subsequent network subscriber connected to a further data line (205, 210, 215, 220, 225, 230, 235, 240, 245, 250, 255, 260), the protocol network subscriber (115, 125, 135, 145, 155, 160, 165, 170, 175, 180, 185) is designed to send the query telegram back to the configuration subscriber (105) via the receiving data line (205, 210, 215, 220, 225, 230, 235, 240, 245, 250, 255, 260),
wherein a network distributor (120, 130, 140) is designed so as, if the network distributor (120, 130, 140) receives the query telegram at a first input/output port (P0) via the data line (205, 210, 215, 220, 225, 230, 235, 240, 245, 250, 255, 260), to enter an item of port information about further input/output ports (P1, P2, P3, P4, P6, P7) of the network distributor (120, 130, 140), to which ports further data lines (210, 215, 220, 225, 230, 235, 240, 245, 250, 255, 260) are connected, in the query telegram and to send the query telegram back to the configuration subscriber (105) via the receiving data line (205, 210, 215, 220, 225, 230, 235, 240, 245, 250, 255, 260), and
wherein the configuration subscriber (105) is designed so as, when the configuration subscriber (105) receives the query telegram from the network distributor (120, 130, 140) via the data line (205, 210, 215, 220, 225, 230, 235, 240, 245, 250, 255, 260), to generate, on the basis of the item of port information, further query telegrams each containing an item of routing information and to send said further query telegrams to the network distributor (120, 130, 140) via the data line (205, 210, 215, 220, 225, 230, 235, 240, 245, 250, 255, 260), and the network distributor (120, 130, 140) is designed to output the further query telegrams at the respective further input/output port (P1, P2, P3, P4, P6, P7) associated with the respective item of routing information in order to detect network subscribers that are connected to the respective further input/output ports (P1, P2, P3, P4, P6, P7) of the network distributor (120, 130, 140) via the further data lines (210, 215, 220, 225, 230, 235, 240, 245, 250, 255, 260).

9. Automation network according to Claim 8,
wherein the items of routing information are preset in the network distributor (120, 130, 140), wherein the item of port information comprises the items of routing information and the network distributor (120, 130, 140) is designed to enter the item of port information in the query telegram and to send the query telegram back to the configuration subscriber (105) via the receiving data line (205, 210, 215, 220, 225, 230, 235, 240, 245, 250, 255, 260) .

10. Automation network according to Claim 8,
wherein the configuration subscriber (105) is designed so as, after receiving the query telegram containing the item of port information from the network distributor (120, 130, 140) and before sending the further query telegrams, to send a configuration telegram to the network distributor (120, 130, 140) via the data line (205, 210, 215, 220, 225, 230, 235, 240, 245, 250, 255, 260) in order to associate the respective item of routing information with the further input/output ports (P1, P2, P3, P4, P6, P7) of the network distributor (120, 130, 140) on the basis of the item of port information.

11. Automation network according to one of Claims 8 to 10,
wherein the configuration subscriber (105) is designed to define a time window in which the configuration subscriber (105) expects back a respective query telegram that has been sent, wherein the configuration subscriber (105) is designed so as, if the configuration subscriber (105) does not receive a query telegram within the defined time window, to exclude the data line (205, 210, 215, 220, 225, 230, 235, 240, 245, 250, 255, 260) on which the query telegram was output from further data communication.

12. Automation network according to one of Claims 8 to 11,
wherein the item of network subscriber information comprises a network subscriber identifier and a data transmission rate of the protocol network subscriber (115, 125, 135, 145, 155, 160, 165, 170, 175, 180, 185) .

13. Automation network according to one of Claims 8 to 12,
wherein the item of port information comprises a port identifier and a data transmission rate of the respective further input/output port (P1, P2, P3, P4, P6, P7) of the network distributor (120, 130, 140) .

14. Automation network according to one of Claims 8 to 13,
wherein the query telegrams and a configuration telegram are in the form of telegrams based on the EtherCAT data transmission protocol.

## Revendications

1. Procédé permettant de détecter des abonnés de réseau dans un réseau d'automatisation (100) au moyen de télégrammes de requête envoyés par un abonné de configuration (105), les abonnés de réseau dans le réseau d'automatisation (100) étant reliés par des lignes de données (205, 210, 215, 220, 225, 230, 235, 240, 245, 250, 255, 260) et les abonnés de réseau comprenant au moins un abonné de réseau de protocole (115, 125, 135, 145, 155, 160, 165, 170, 175, 180, 185) qui est conçu pour traiter un certain protocole de transmission de données, et les abonnés de réseau comprenant au moins un répartiteur de réseau (120, 130, 140) qui présente des ports d'entrée/sortie (P0, P1, P2, P3, P4, P5, P6, P7),
dans lequel, quand un abonné de réseau de protocole (115, 125, 135, 145, 155, 160, 165, 170, 175, 180, 185) reçoit un télégramme de requête par une ligne de données (205, 210, 215, 220, 225, 230, 235, 240, 245, 250, 255, 260), l'abonné de réseau de protocole (115, 125, 135, 145, 155, 160, 165, 170, 175, 180, 185) inscrit une information d'abonné de réseau dans le télégramme de requête et envoie le télégramme de requête à un abonné de réseau suivant par une autre ligne de données que la ligne de données de réception (205, 210, 215, 220, 225, 230, 235, 240, 245, 250, 255, 260), ou quand aucun abonné suivant n'est connecté à une autre ligne de données (205, 210, 215, 220, 225, 230, 235, 240, 245, 250, 255, 260), l'abonné de réseau de protocole (115, 125, 135, 145, 155, 160, 165, 170, 175, 180, 185) renvoie le télégramme de requête par la ligne de données de réception (205, 210, 215, 220, 225, 230, 235, 240, 245, 250, 255, 260) à l'abonné de configuration (105),
dans lequel, quand un répartiteur de réseau (120, 130, 140) reçoit le télégramme de requête par la ligne de données (205, 210, 215, 220, 225, 230, 235, 240, 245, 250, 255, 260) à un premier port d'entrée/sortie (P0), le répartiteur de réseau (120, 130, 140) inscrit une information de port concernant d'autres ports d'entrée/sortie (P1, P2, P3, P4, P6, P7) du répartiteur de réseau (120, 130, 140), auxquels les autres lignes de données (210, 215, 220, 225, 230, 235, 240, 245, 250, 255, 260) sont connectées, dans le télégramme de requête, et renvoie le télégramme de requête par la ligne de données de réception (205, 210, 215, 220, 225, 230, 235, 240, 245, 250, 255, 260) à l'abonné de configuration (105), et
dans lequel, quand l'abonné de configuration (105) reçoit le télégramme de requête du répartiteur de réseau (120, 130, 140) par la ligne de données (205, 210, 215, 220, 225, 230, 235, 240, 245, 250, 255, 260), l'abonné de configuration (105) génère sur la base de l'information de port d'autres télégrammes de requête avec respectivement une information de routage et les envoie au répartiteur de réseau (120, 130, 140) par la ligne de données (205, 210, 215, 220, 225, 230, 235, 240, 245, 250, 255, 260), et le répartiteur de réseau (120, 130, 140) sort les autres télégrammes de requête respectivement à l'autre port d'entrée/sortie (P1, P2, P3, P4, P6, P7) associé à l'information de routage respective pour détecter des abonnés de réseau qui sont connectés aux autres ports d'entrée/sortie (P1, P2, P3, P4, P6, P7) respectifs du répartiteur de réseau (120, 130, 140) par les autres lignes de données (210, 215, 220, 225, 230, 235, 240, 245, 250, 255, 260).

2. Procédé selon la revendication 1, dans lequel les informations de routage sont préréglées dans le répartiteur de réseau (120, 130, 140), l'information de port comprenant les informations de routage et le répartiteur de réseau (120, 130, 140) inscrivant l'information de port dans le télégramme de requête et renvoyant le télégramme de requête par la ligne de données de réception (205, 210, 215, 220, 225, 230, 235, 240, 245, 250, 255, 260) à l'abonné de configuration (105) .

3. Procédé selon la revendication 1, dans lequel l'abonné de configuration (105), après avoir reçu le télégramme de requête avec l'information de port de la part du répartiteur de réseau (120, 130, 140) et avant d'envoyer l'autre télégramme de requête, envoie un télégramme de configuration par la ligne de données (205, 210, 215, 220, 225, 230, 235, 240, 245, 250, 255, 260) au répartiteur de réseau (120, 130, 140) afin d'associer aux autres ports d'entrée/sortie (P1, P2, P3, P4, P6, P7) du répartiteur de réseau (120, 130, 140) respectivement l'information de routage sur la base de l'information de port.

4. Procédé selon l'une quelconque des revendications 1 à 3,
dans lequel l'abonné de configuration (105) définit un créneau dans lequel l'abonné de configuration (105) attend respectivement le retour d'un télégramme de requête envoyé,
dans lequel, quand l'abonné de configuration (105) ne reçoit aucun télégramme de requête dans le créneau défini, l'abonné de configuration (105) exclut de toute autre communication de données la ligne de données (205, 210, 215, 220, 225, 230, 235, 240, 245, 250, 255, 260) sur laquelle le télégramme de requête a été sorti.

5. Procédé selon l'une quelconque des revendications 1 à 4, dans lequel l'information d'abonné de réseau comprend un identifiant d'abonné de réseau et un débit binaire de l'abonné de réseau de protocole (115, 125, 135, 145, 155, 160, 165, 170, 175, 180, 185).

6. Procédé selon l'une quelconque des revendications 1 à 5, dans lequel l'information de port comprend un identifiant de port et un débit binaire de l'autre port d'entrée/sortie (P1, P2, P3, P4, P6, P7) respectif du répartiteur de réseau (120, 130, 140).

7. Procédé selon l'une quelconque des revendications 1 à 6, dans lequel les télégrammes de requête et un télégramme de configuration sont réalisés sous la forme de télégrammes basés sur un protocole de transmission de données EtherCAT.

8. Réseau d'automatisation (100) comprenant des abonnés de réseau qui sont reliés par des lignes de données (205, 210, 215, 220, 225, 230, 235, 240, 245, 250, 255, 260), les abonnés de réseau dans le réseau d'automatisation (100) comprenant au moins un abonné de réseau de protocole (115, 125, 135, 145, 155, 160, 165, 170, 175, 180, 185) qui est conçu pour traiter un certain protocole de transmission de données, et les abonnés de réseau comprenant au moins un répartiteur de réseau (120, 130, 140) qui présente des ports d'entrée/sortie (P0, P1, P2, P3, P4, P5, P6, P7),
un abonné de configuration (105) étant conçu pour envoyer un télégramme de requête par une ligne de données (205, 210, 215, 220, 225, 230, 235, 240, 245, 250, 255, 260), un abonné de réseau de protocole (115, 125, 135, 145, 155, 160, 165, 170, 175, 180, 185) étant conçu, quand l'abonné de réseau de protocole (115, 125, 135, 145, 155, 160, 165, 170, 175, 180, 185) reçoit le télégramme de requête par une ligne de données (205, 210, 215, 220, 225, 230, 235, 240, 245, 250, 255, 260), pour inscrire une information d'abonné de réseau dans le télégramme de requête et pour envoyer le télégramme de requête à un abonné de réseau suivant par une autre ligne de données que la ligne de données de réception (205, 210, 215, 220, 225, 230, 235, 240, 245, 250, 255, 260), ou quand aucun abonné de réseau suivant n'est connecté à une autre ligne de données (205, 210, 215, 220, 225, 230, 235, 240, 245, 250, 255, 260), l'abonné de réseau de protocole (115, 125, 135, 145, 155, 160, 165, 170, 175, 180, 185) est réalisé pour renvoyer le télégramme de requête par la ligne de données de réception (205, 210, 215, 220, 225, 230, 235, 240, 245, 250, 255, 260) à l'abonné de configuration (105), un répartiteur de réseau (120, 130, 140) étant conçu, quand le répartiteur de réseau (120, 130, 140) reçoit le télégramme de requête par la ligne de données (205, 210, 215, 220, 225, 230, 235, 240, 245, 250, 255, 260) à un premier port d'entrée/sortie (P0), pour inscrire une information de port concernant d'autres ports d'entrée/sortie (P1, P2, P3, P4, P6, P7) du répartiteur de réseau (120, 130, 140), auxquels d'autres lignes de données (210, 215, 220, 225, 230, 235, 240, 245, 250, 255, 260) sont connectées, dans le télégramme de requête et pour renvoyer le télégramme de requête par la ligne de données de réception (205, 210, 215, 220, 225, 230, 235, 240, 245, 250, 255, 260) à l'abonné de configuration (105), et
l'abonné de configuration (105) étant réalisé, quand l'abonné de configuration (105) reçoit le télégramme de requête du répartiteur de réseau (120, 130, 140) par la ligne de données (205, 210, 215, 220, 225, 230, 235, 240, 245, 250, 255, 260), pour générer sur la base de l'information de port d'autres télégrammes de requête avec respectivement une information de routage et pour les envoyer au répartiteur de réseau (120, 130, 140) par la ligne de données (205, 210, 215, 220, 225, 230, 235, 240, 245, 250, 255, 260), et le répartiteur de réseau (120, 130, 140) étant réalisé pour sortir les autres télégrammes de requête respectivement à l'autre port d'entrée/sortie (P1, P2, P3, P4, P6, P7) associé à l'information de routage respective afin de détecter des abonnés de réseau qui sont connectés aux autres ports d'entrée/sortie (P1, P2, P3, P4, P6, P7) respectifs du répartiteur de réseau (120, 130, 140) par les autres lignes de données (210, 215, 220, 225, 230, 235, 240, 245, 250, 255, 260).

9. Réseau d'automatisation selon la revendication 8, dans lequel les informations de routage sont préréglées dans le répartiteur de réseau (120, 130, 140), l'information de port comprenant les informations de routage, et le répartiteur de réseau (120, 130, 140) étant réalisé pour inscrire l'information de port dans le télégramme de requête et pour renvoyer le télégramme de requête par la ligne de données de réception (205, 210, 215, 220, 225, 230, 235, 240, 245, 250, 255, 260) à l'abonné de configuration (105).

10. Réseau d'automatisation selon la revendication 8, dans lequel l'abonné de configuration (105) est conçu, après avoir reçu le télégramme de requête avec l'information de port de la part du répartiteur de réseau (120, 130, 140) et avant d'envoyer les autres télégrammes de requête, pour envoyer un télégramme de configuration par la ligne de données (205, 210, 215, 220, 225, 230, 235, 240, 245, 250, 255, 260) au répartiteur de réseau (120, 130, 140) afin d'associer aux autres ports d'entrée/sortie (P1, P2, P3, P4, P6, P7) du répartiteur de réseau (120, 130, 140) respectivement l'information de routage sur la base de l'information de port.

11. Réseau d'automatisation selon l'une quelconque des revendications 8 à 10,
dans lequel l'abonné de configuration (105) est réalisé pour définir un créneau dans lequel l'abonné de configuration (105) attend respectivement le retour d'un télégramme de requête envoyé,
l'abonné de configuration (105) étant conçu, quand l'abonné de configuration (105) ne reçoit aucun télégramme de requête dans le créneau défini, pour exclure de toute autre communication de données la ligne de données (205, 210, 215, 220, 225, 230, 235, 240, 245, 250, 255, 260) sur laquelle le télégramme de requête a été sorti.

12. Réseau d'automatisation selon l'une quelconque des revendications 8 à 11, dans lequel l'information d'abonné de réseau comprend un identifiant d'abonné de réseau et un débit binaire de l'abonné de réseau de protocole (115, 125, 135, 145, 155, 160, 165, 170, 175, 180, 185).

13. Réseau d'automatisation selon l'une quelconque des revendications 8 à 12, dans lequel l'information de port comprend un identifiant de port et un débit binaire des autres ports d'entrée/sortie (P1, P2, P3, P4, P6, P7) respectifs du répartiteur de réseau (120, 130, 140).

14. Réseau d'automatisation selon l'une quelconque des revendications 8 à 13, dans lequel les télégrammes de requête et un télégramme de configuration sont réalisés sous la forme de télégrammes basés sur un protocole de transmission de données EtherCAT.
